Europäisches Patentamt

European Patent Office

Office européen des brevets

(19)

(11) **EP 0 412 853 B1**

(12) **EUROPEAN PATENT SPECIFICATION**

(45) Date of publication and mention
of the grant of the patent:
**26.03.1997 Bulletin 1997/13**

(51) Int Cl.$^6$: **G05D 19/02**

(21) Application number: **90308893.8**

(22) Date of filing: **13.08.1990**

(54) **Active-type vibration control apparatus**

Aktives Schwingungssteuergerät

Appareil de commande de vibrations de type actif

(84) Designated Contracting States:
**DE FR GB**

(30) Priority: **11.08.1989 JP 208375/89**
**24.08.1989 JP 217877/89**
**24.08.1989 JP 217878/89**
**13.03.1990 JP 61591/90**
**13.03.1990 JP 61592/90**

(43) Date of publication of application:
**13.02.1991 Bulletin 1991/07**

(73) Proprietor: **Bridgestone Corporation**
**Tokyo 104 (JP)**

(72) Inventors:
• **Murakami, Kazutomo**
**Yokohama City, Kanagawa Pref. (JP)**
• **Mizuno, Keiichiro**
**Tokyo (JP)**
• **Iida, Kazuyoshi**
**Iruma City, Saitama Pref. (JP)**

• **Miyazaki, Toshihiro**
**Yokohama City, Kanagawa Pref. (JP)**

(74) Representative: **Whalley, Kevin et al**
**MARKS & CLERK,**
**57-60 Lincoln's Inn Fields**
**London WC2A 3LS (GB)**

(56) References cited:
**EP-A- 0 032 158       EP-A- 0 067 548**
**EP-A- 0 309 211       EP-A- 0 342 040**
**WO-A-88/02912        GB-A- 2 130 651**
**GB-A- 2 165 667**

• **TWENTY-SECOND ASILOMAR CONFERENCE ON SIGNALS, SYSTEMS & COMPUTERS vol. 1, 31 October 1988, PACIFIC GROVE, CALIFORNIA pages 710 - 714; RYACIOTAKI-BOUSSALIS: 'the use of decentralized control on the vibration supression in large flexible dynamic systems'**
• **PATENT ABSTRACTS OF JAPAN vol. 11, no. 22 (P-538)(2469) 21 January 1987 & JP-A-61 194 512 (MITSUBISHI) 28 August 1986**

EP 0 412 853 B1

## Description

The present invention relates to an active-type vibration control apparatus which is capable of significantly reducing vibration transmitted from a movable base member to an object suspended on the base member in a vibration-isolating manner. An apparatus as defined in the preamble of claim 1 is disclosed in EP-A2-0 309 211.

It is known in various technical fields to effectively isolate an object from vibration; for example, in order to reduce vibration or noise transmitted from power machines to surroundings, to mitigate transmission of vibration to cargoes on trucks, trains the like transportation vehicles, to isolate precision machines, such as microscopes, IC manufacturing devices, etc., from transmission of vibration via a support table.

To this end, it is widely known to passively support an object via an elastic member, such as a vibration-isolating rubber member, pneumatic spring, metal spring or the like, in combination with a damper if necessary. However, such a passive support system suffers from the problem in that it accompanies a resonance at frequency $f_0$ which is expressed as:

$$f_0 = (1/2\pi) \sqrt{K/M}$$

where K is the spring constant and M the mass of the object. There is a significant increase in the response ratio of the system at the resonance frequency $f_0$, so that the vibration in the neighborhood of the resonance frequency is enhanced, rather than being reduced.

Thus, there has recently been proposed a so-called semi-active type supporting system wherein the spring constant K and damping factor C of the system are variable. Even with this type of system, however, particularly when the vibration transmitted from the base member to the object includes a wide range frequency component, or when the vibration is a random vibration, there necessarily exists a resonance point in some frequency band, where the vibration cannot be effectively reduced.

Therefore, with the abovementioned passive-type or semi-active type supporting system, it is often very difficult to achieve a significant reduction of wide range vibration over the entire frequency range thereof.

Consequently, it is an object of the present invention to provide an improved vibration control apparatus which is substantially free from the problems of resonance, and which thus makes it readily possible to achieve a significant reduction of wide range vibration over the entire frequency range thereof.

The present invention provides an apparatus for actively controlling vibration of at least one object, comprising:

a movable base member;

a vibration-isolating means;

at least one object mounted on said movable base member with said vibration-isolating means disposed therebetween;

a first vibration sensor secured to said object for detecting original vibration thereof, said vibration sensor outputting a vibration signal corresponding to said detected vibration;

at least one adaptive digital filter, responsive to said vibration signal, including adaptive algorithm means for generating a vibration control signal having a vibration waveform for minimizing the amplitude of vibration of said object, said filter being connected to said first vibration sensor;

at least one actuator, secured to said object and responsive to said vibration control signal, for applying an inverse vibration signal to said object so as to reduce the vibration of said object;

a resonance preventing circuit for modifying an output from said adaptive digital filter and connected in parallel to said adaptive digital filter;

a means for transmitting an output of said adaptive digital filter to said actuator; and

a second vibration sensor secured to said base member for detecting vibration thereof, said second vibration sensor being connected to said digital filter;

characterized in that said inverse vibration signal is transmitted to said actuator from said adaptive digital filter so as to apply to the object a compensatory vibration which interferes with the original vibration of the object to actively cancel the original vibration and in that the actuator generates the compensatory vibration on a time domain basis in response to said vibration control signal of said adaptive digital filter.

According to the present invention as defined above, there is provided an apparatus for actively controlling vibration of an object which is mounted on a vibratory base member with a vibration-isolating means therebetween, comprising: a vibration sensor secured to said object for detecting vibration thereof; an actuator secured to said object for applying an inverse vibration thereto; and a digital filter with an input connected to said vibration sensor and an output connected to said actuator, said digital filter being adapted to generate an output signal for controlling the actuator such that the vibration of said object is at least suppressed by the inverse vibration applied to the object by the actuator.

The present invention thus provides an adaptive-type active vibration control apparatus for significantly reducing the vibration of various objects without being affected by resonance peak frequencies, which is particularly suitable when the object is applied with vibration over a wide frequency range, or with vibration of a random or periodic nature.

The invention will be further described, by way of example only, with reference to the accompanying drawings, in which:

Fig. 1 is a block diagram showing one example of the vibration control apparatus according to the invention;

Fig. 2 is a block diagram showing a basic arrangement of the vibration control apparatus according to the invention;

Fig. 3 is a schematic view of an adaptive digital filter shown in Fig. 2;

Fig. 4 is a block diagram showing a basic arrangement of the digital filter shown in Fig. 2 with its filter coefficients being fixed;

Figs. 5, 6, 7, 8 and 9 are block diagrams showing various examples of inverse vibration generating circuit in the vibration control apparatus according to the invention;

Fig. 10 is a block diagram showing a practical arrangement of the vibration control apparatus according to the invention, including the fixed digital filter shown in Fig. 4;

Fig. 11 is a block diagram showing another basic arrangement of the vibration control apparatus according to the invention;

Figs. 12, 13 and 14 are graphs respectively showing frequency characteristics of the response ratio and vibration acceleration level and waveform of the acceleration amplitude in the vibration control apparatus according to the invention;

Fig. 15 is a schematic view of a model wherein a heavy and tall object is supported in a vibration isolating manner via a table;

Fig. 16 is a graph showing the frequency characteristic of the response ratio in the model of Fig. 15;

Fig. 17 is a block diagram showing the essential portion of the vibration control apparatus according to the invention applied to the Vibration control of an object with a complicated configuration, including a plurality of vibration regions;

Fig. 18 is a block diagram showing the arrangement of the vibration control apparatus according to the invention applied to the vibration control of an object with a plurality of vibration directions;

Figs. 19, 20 and 21 are graphs respectively showing frequency characteristics of the response ratio and vibration acceleration level and waveform of the acceleration amplitude in the vibration control apparatus shown in Figs. 17 and 18;

Figs. 22, 23 and 24 are schematic views respectively showing applications of the invention to the vibration control of a vehicle seat, a suspension and an engine;

Fig. 25 is a block diagram showing a basic arrangement of a circuit for reducing two-dimensional vibration in the vibration control apparatus according to the invention;

Fig. 26 is a block diagram showing the practical arrangement of the vibration control apparatus of Fig. 25;

Figs. 27, 28 and 29 are block diagrams of arrangements wherein crosstalk elimination circuits are incorporated into the vibration control apparatus of Fig. 26;

Fig. 30 is a block diagram showing a basic arrangement of a circuit for reducing three-dimensional vibration in the vibration control apparatus according to the invention;

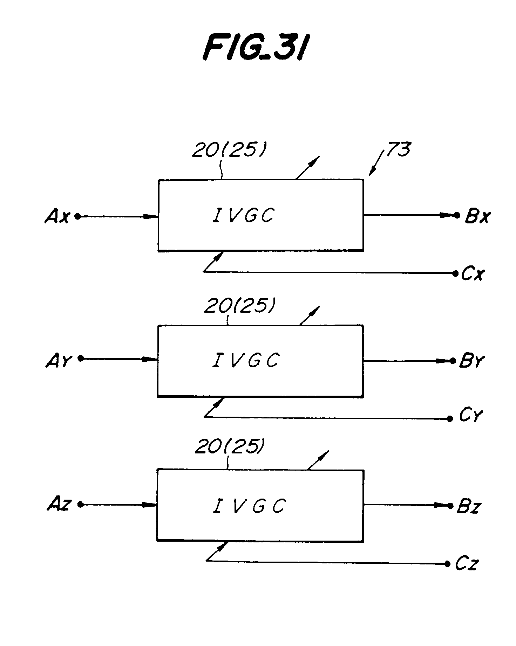

Fig. 31 is a block diagram showing a basic arrangement of the vibration control circuit shown in Fig. 30;

Figs. 32 and 33 are block diagrams of arrangements wherein crosstalk elimination circuits are incorporated into the vibration control circuit of Fig. 31;

Fig. 34 is a block diagram of the vibration control apparatus according to another embodiment of the invention;

Figs. 35, 36 and 37 are block diagrams similar to Figs. 5-9, showing various examples of inverse vibration generating circuit in the vibration control apparatus of Fig. 34;

Fig. 38 is a block diagram of the vibration control apparatus according to another embodiment of the invention, wherein an actuator is directly secured to the object;

Fig. 39 and 40 are block diagrams showing different embodiments of the vibration control apparatus according to the invention, wherein the adaptive-type inverse vibration generating circuit in Figs. 34 and 38 are respectively switched into a fixed-type inverse vibration generating circuit digital filter;

Fig. 41 is a block diagram showing another embodiment of the vibration control apparatus according to the invention which is similar to that of Fig. 34, but in which the actuator is arranged at a different location;

Fig. 42 is a block diagram similar to Fig. 25, showing another example of a basic arrangement of the circuit for reducing two-dimensional vibration in the vibration control apparatus according to the invention;

Fig. 43 is a block diagram similar to Fig. 39, showing another example of a basic arrangement of the circuit for reducing three-dimensional vibration in the vibration control apparatus according to the invention;

Fig. 44 is a block diagram showing one embodiment of the apparatus according to the invention, which is for controlling the vibration of two objects stacked one above the other;

Figs. 45, 46 and 47 illustrate variations of the arrangement of Fig. 44;

Fig. 48 is a block diagram showing another embodiment of the invention wherein the error operation circuit in Fig. 44 is replaced by a signal mixer;

Fig. 49 is a block diagram showing still another embodiment of the present invention;

Fig. 50 is a block diagram showing an application of the invention to an automobile suspension system;

Fig. 51 is a schematic view showing an actual example of the arrangement of Fig. 50;

Fig. 52-54 are schematic views showing examples of the vibration control apparatus of the invention as applied to the vibration control of an automobile seat, a truck cabin and an engine mount;

Figs. 55A and 55B are graphs showing the frequency characteristics of the vibration acceleration response ratio versus the vibration acceleration of the movable base member; and

Figs. 56A and 56B are graphs showing the waveforms of the vibration acceleration amplitude of the objects.

The present invention will now be fully explained in further detail, by referring to various types of preferred embodiments illustrated in the accompanying drawings.

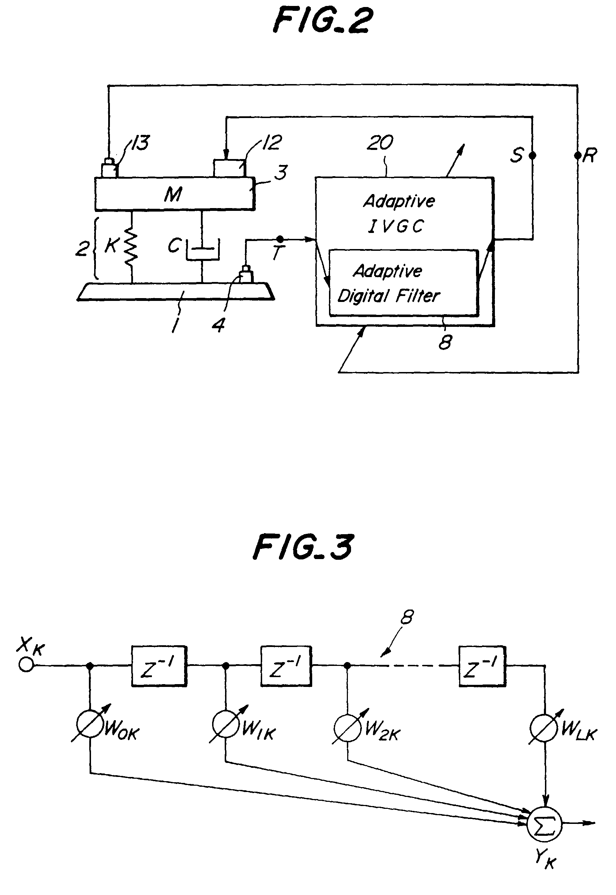

To begin with, the basic principle of the vibration control apparatus according to the present invention will be explained below, with reference to Fig. 2 which shows the basic arrangement of the apparatus.

As appreciated from Fig. 2, vibration is transmitted from a movable base member 1 via a suspension 2 to an object 3. The apparatus according to the present invention includes an inverse vibration generating circuit (IVGC) 20 for generating an "inverse vibration" with a waveform which is proportional to, and of a sign opposite to that of the waveform of the vibration of the object 3. The inverse vibration generated by the circuit 20 is applied to the object 3 via an actuator 12 secured thereto. The inverse vibration so applied to the object 3 interferes with the original vibration of the object 3 transmitted from the base member 1, so that the object 3 is caused to vibrate with a controlled, significantly reduced intensity.

The inverse vibration for controlling the original vibration may be applied to the object 3 either directly or indirectly via elements which vibrate jointly with the object 3, or which vibrate with a waveform having a predetermined correlation to that of the object 3, such as a supporting table.

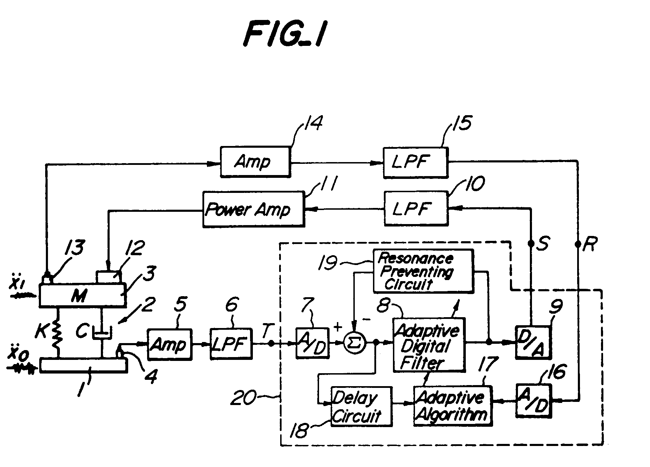

As shown in Fig. 1, the inverse vibration generating circuit 20 includes an adaptive digital filter 8 and a signal processor 17 for executing an adaptive algorithm. The digital filter 8 is supplied with a signal representing the vibration of the base member 1 as detected by a vibration sensor 4, and also with a signal representing the vibration of the object 3 as detected by another vibration sensor 13. The filter coefficients of the digital filter 8 are controlled by the signal processor 17 rapidly, so as to minimize the level of the signal detected by the vibration sensor 13. To this end, an actuator 12 is secured to the object 3 and controlled on a real-time basis by the digital filter 8 such that the actuator 12 applies to the object 3 an inverse vibration for effectively canceling the original vibration of the object 3.

Use of such a digital filter 8 makes it possible to accurately follow the variation or fluctuation in the transfer characteristics of the suspension 2, or in the response characteristic of the sensors 4, 13, thereby to stably reduce the vibration of the object 3.

Thus, when vibration is transmitted from the base member 1 to the object 3 via the suspension 2, the vibration is controlled by the apparatus according to the present invention in that the vibrations of the base member 1 and the object 3 are respectively detected by the sensors 4 and 13 whose output signals are supplied to the digital filter 8 to generate a signal with a waveform inversely proportional to that of the original vibration of the object 3. This signal is supplied to the actuator 12 to apply to the object 3 a compensatory vibration which interferes with the original vibration of the object 3 to actively cancel the latter.

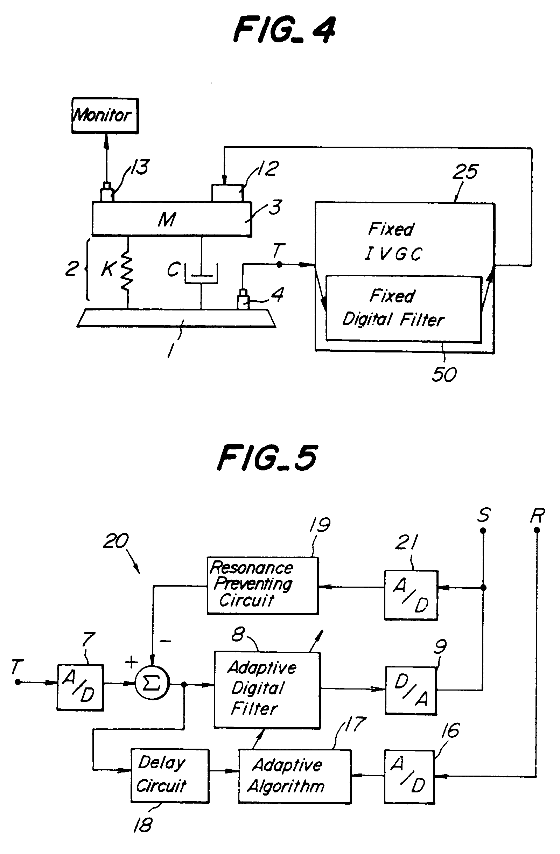

The adaptive digital filter 8 included in the inverse vibration generating circuit 20 may be either a FIR-type (Finite Impulse Response) filter or an IIR-type (Infinite Impulse Response) filter. One example of a FIR-type adaptive digital filter is shown in Fig. 3, which is arranged to transform an input signal XK into a desired output signal YK, by properly determining the filter coefficients $W_{0K}, W_{1K}, \cdots W_{LK}$. In this case, since the adaptive digital filter 8 is combined with the signal processor 17 (Fig. 1) with an adaptive algorithm, the above-mentioned filter coefficients $W_{0K}, W_{1K}, \cdots W_{LK}$ are caused to vary in an adaptive manner following variation in the system or environmental parameters to converge into optimum filter coefficients.

Here, the adaptive algorithm may be executed for example by so-called LMS (Least Mean Square) method, SER (Sequential Regression) method, Newton method, steepest descent method, filtered-X algorithm, error scanning algorithm, etc. Among others, the LMS method is most suitable in efficiently executing the adaptive algorithm, whereby the convergence speed and the stability of the adaptive digital filter 8 can be adjusted in a well-balanced manner by adjusting the adaptive gain constant ($\mu$).

Moreover, it is possible to effect a switch-over into a vibration control mode based on a fixed-type digital filter method (refer to the digital filter 50 in Fig. 4), by fixing the filter coefficients $W_{0K}, W_{1K}, \cdots W_{LK}$ of the adaptive digital filter 8. That is, in the arrangement shown in Fig. 2, when there is no substantial change in the characteristics of the vibration system after reduction of the vibration of the object 3 as a result of the vibration control with the adaptive inverse vibration generating circuit 20, the filter coefficients converge into respectively predetermined constant value. In such a state, by fixing the filter coefficients, it is possible to control the vibration in essentially the same manner as a situation wherein use is made of a fixed-type inverse vibration generating circuit 25 as shown in Fig. 4.

The arrangement shown in Fig. 4 is constructed such that the vibration of the movable base member 1 as detected by the sensor 4 is converted into a signal which is supplied to a fixed-type inverse vibration generating circuit 25 (or to a fixed-type digital filter 50) such that the actuator 12 applies an inverse vibration to the object 3 to significantly reduce the vibration thereof.

When the suspension 2, vibration sensors 4 and 13, actuator 12, etc. function with substantially constant characteristics without significant variation or fluctuation, the fixed-type filter method shown in Fig. 4 also achieves an excellent reduction of the vibration in the same manner as the adaptive filter method shown in Fig. 2. Furthermore, switch-over into the fixed-type filter method is particularly advantageous for a pulsive input condition since it achieves a complete feed forward type control.

It is of course possible that the switch-over can be effected in the opposite sense, i.e. from a fixed-type filter method to an adaptive filter method.

For example, during the control based on fixed digital filter coefficients, as the vibration control becomes ineffective due to some reason or other, the digital filter 8 functioning as a fixed-type digital filter with the fixed digital filter coefficients may be switched-over into an adaptive-type, so that an adaptive algorithm at the signal processor 17 takes place with the filter coefficients of the fixed-type control as the initial values, whereby the filter coefficients $W_{0K}, W_{1K}, \cdots W_{LK}$ are rapidly varied to realize an optimum suppressed vibration state.

Thus, by effecting a switch-over into an adaptive control with the fixed-type filter coefficients as the initial values, it is possible in many cases to reduce the convergence time to optimum filter coefficients (corresponding to a state wherein the vibration of the object 3 can be most efficiently suppressed), as compared with commencement of adaptive control from the first.

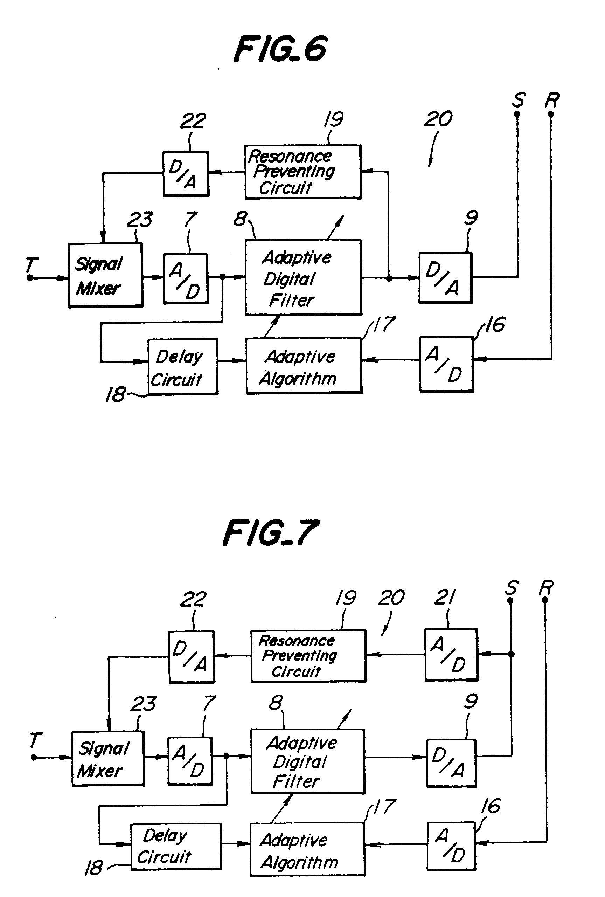

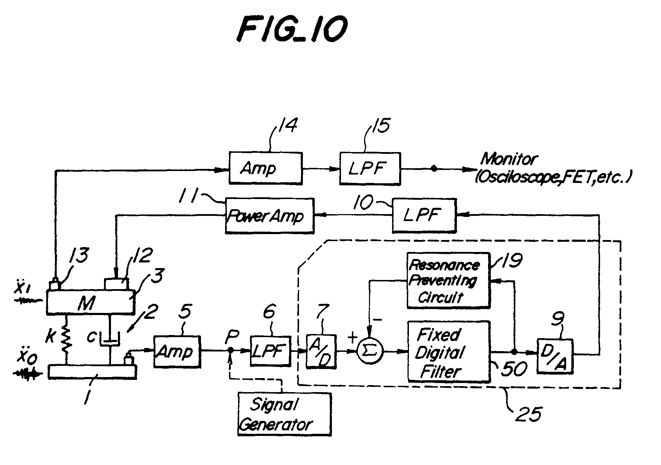

Fig. 1 is a block diagram of a practical arrangement of the adaptive-type vibration controlling apparatus according to the present invention with a basic structure shown in Fig. 2, while Figs. 5-9 are block diagrams of various examples of the inverse vibration generating circuit 20 shown in Fig. 1. Furthermore, there is shown in Fig. 10 a block diagram of the vibration controlling circuit of Fig. 4 constructed by switching-over the inverse vibration generating circuit 20 of the adaptive-type vibration controlling apparatus of Fig. 2 into a fixed-type circuit.

In the vibration controlling apparatus according to the present invention, when a fixed-type inverse vibration generating circuit 25 shown in Fig, 4 is formed for example by switching-over the adaptive digital filter 8 into a fixed-type filter mode, it is also possible to determine the digital filter coefficients by measurement and calculations to be described hereinafter, and to use the so-determined filter coefficients as the initial values for switching into an adaptive-type inverse vibration generating circuit 20. This method is particularly advantageous in minimizing the convergence time.

Now, referring to Fig. 10, explanation will be made of the manner of determining the filter coefficients in the above-mentioned fixed-type digital filter method. First of all, the following two kinds of transfer functions (transfer characteristics) T and D are determined by measurement, from which the digital filter coefficients $W_{0K}, W_{1K}, \cdots W_{LK}$ are calculated.

1. Transfer function T: Transfer function of vibration transmission path from the base member 1 via the suspension 2 to the object 3.
2. Transfer function D: Transfer function of the input signal versus vibration signal generated in the object 3 when the fixed-type digital filter 50 is set to all- pass mode and applied with noise or the like signal to actuate the actuator 12.

The transfer function (impulse response) H of the digital filter 50 switched into fixed mode can be obtained by $H = - (T/D)$. Thus, by writing this filter coefficient H into the digital filter 50, a fixed-type vibration control circuit as shown in Figs. 4 and 10 can be formed.

Now, the manner of actually determining the transfer functions T and D will be explained below by referring to Fig. 10.

Transfer function T:

Transfer function between points P and Q is measured by means of a frequency analyzer (FFT) or the like, by switching the actuator 12 into OFF state.

Transfer function D:

Transfer function between points P and Q is measured by appropriately limiting the frequency range, and supplying an amplified random signal from the point P to operate the actuator 12, while the amplifier 5 is separated from the point P and the fixed-type digital filter 50 is set into "all-pass" mode.

The filter coefficients of the fixed-type digital filter 50 so determined can be used as initial values to switching into an adaptive digital filter method (Fig. 1).

The adaptive-type inverse vibration generating circuit 20 may have an arrangement as shown in Figs. 5-9, other than that shown in Fig. 1. When, however, the circuit 20 is used by selectively switching into fixed mode and adaptive mode, it is preferable for the circuit to have the same arrangement in the two modes.

It will be appreciated that, in accordance with the present invention, by making use of an adaptive-type inverse vibration generating circuit 20 as shown in Figs. 1 and 2 or Figs. 5-9, it is possible to realize an improved vibration reduction notwithstanding the nature of the input vibration, i.e. whether periodical vibration or random one. Moreover, by making it possible to switch the filter coefficients $W_{0K}, W_{1K}, \cdots W_{LK}$ of the adaptive digital filter 8 into fixed-type, the following two control modes i) and ii) can be obtained whereby the apparatus of the invention can be used more effectively for particular application fields.

i) Adaptive-type digital filter mode
ii) Selective mode wherein adaptive-type digital filter mode can be switched into fixed-type digital filter mode and vice versa.

In case of the switching mode ii) above, it is preferable for the circuit to have the same arrangement in the two digital filter modes.

Now, explanation will be given in relation to the vibration sensor 4, 13 and the actuator 12 both included in the vibration control apparatus shown in Fig. 2 or 4.

The vibration sensor 4 is to detect the vibration of the movable base member 1, i.e. the input signal to be applied to the adaptive-type inverse vibration generating circuit 20 or to the fixed-type inverse vibration generating circuit 25 which is obtained by switching the circuit 20 into the fixed-mode. By applying the detected signal to the digital filter 8 or 50, it is possible to generate an inverse vibration to be brought into interference with the vibration of the object 3.

Thus, the signal detected by the sensor 4 may be one having a correlation to the vibration of the object 3 so that, besides the vibration of the movable base member 1, the signal representing the vibration of the object 3 itself may be used for this purpose.

The sensors 4 and 13 may be of any type provided that they are capable of detecting the waveform of the vibration, such as a displacement sensor, a velocity sensor, an acceleration sensor, etc.

Also, the actuator 12 may be of any type provided that it is capable of applying an inverse vibration to the object 3 based on the output signal from the digital filter 8 or 50, such as an electromagnetic or piezo-electric actuator, an ultrasonic motor, a pneumatic or hydraulic actuator, an actuator using shape memory material, electrorheological fluid (ERF) or magnetic fluid, etc.

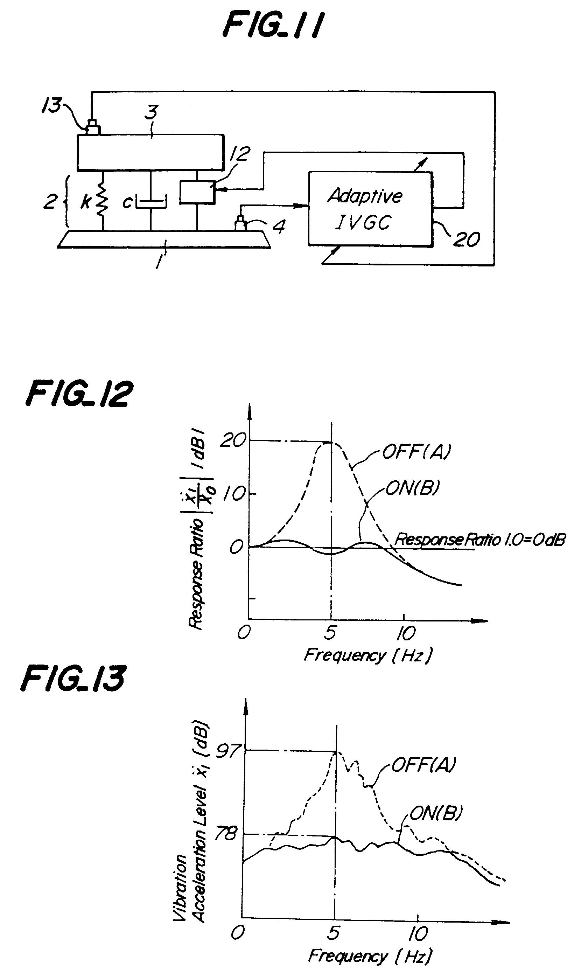

Fig. 11 is a block diagram showing the basic arrangement of the vibration control circuit according to the invention, wherein the actuator 12 is arranged between the movable base member 1 and the object 3. This actuator 12 may also be used to apply an inverse vibration to the object, instead of the inertia mass method shown in Fig. 1 which makes use of inertia force.

The arrangement shown in Fig. 11 may include an actuator with a variable dynamic characteristic such as spring constant or damping force by using visco-electric fluid (ERF) or magnetic fluid; the dynamic characteristic can be varied so as to apply an optimum inverse vibration to the object 3.

Further details of the vibration control apparatus according to the invention are as follows. First of all, in the block diagram of Fig. 1 showing the adaptive-type vibration control apparatus, the inverse vibration application device includes vibration sensors 4, 13 for detecting the vibrations of the base member 1 and the object 3, respectively, amplifiers 5, 14 for amplifying the respective vibration signals, low-pass filters 6, 10, 15, analog-to-digital (A/D) converters 7, 16 for receiving the vibration signal, a digital-to-analog (D/A) converter 9 for supplying the vibration signal, an adaptive digital filter 8, a signal processor 17 for executing the adaptive algorithm, a resonance preventing circuit 19, a delay circuit 18, and a vibration actuator 12 and its power amplifier 11.

Of these elements, the adaptive digital filter 8, signal processor 17, resonance preventing circuit 19, A/D converters 7, 16, and D/A converter 9 jointly constitute the above-mentioned inverse vibration generating circuit 20.

The principle of the vibration control is that, as explained with reference to Fig. 2, the vibration of the movable base member 1 is detected by the sensor 4 whose output signal is passed through the adaptive digital filter 8 to generate a waveform which is capable of canceling the vibration transmitted through the path from the base member 1 to the object 3 via the suspension 2. The signal representing such a waveform is amplified by the amplifier 11, whose output signal is applied to the actuator 12. Corresponding to the amplified signal, the actuator 12 applies to the object 3 a vibration (inverse vibration) to reduce the vibration thereof.

Here, the vibration of the object 3 is detected by the sensor 13, and the filter coefficients of the adaptive digital filter 8 are varied at a high speed using the algorithm of the processor 17, so as to converge into optimum coefficients and thereby minimize the vibration of the object 3 detected by the sensor 13.

In order to determine the filter coefficients of the adaptive digital filter 8, the signal processor 17 is applied with the following two kinds of input signals.

a) The vibration signal of the object 3 detected by the sensor 13.
b) The signal obtained by passing the input signal to the adaptive digital filter 8 through the delay circuit 18.

The two signals a) and b) at the same instant have to be supplied to the signal processor 17 for executing the adaptive algorithm. Thus, for synchronizing the two input signals, the input signal b) to the adaptive digital filter 8 has to be delayed by a predetermined delay time corresponding to the time required for the signal a) to pass through the path including the adaptive digital filter 8, D/A converter 9, low-pass filter 10, power amplifier 11, actuator 12, object 3, vibration sensor 13, amplifier 14, low-pass filter 15 and A/D converter 16.

The delay circuit 18 may be formed by a digital filter with a characteristic corresponding to the transfer characteristic of the above mentioned path, i.e. the path including the adaptive digital filter 8, D/A converter 9, low-pass filter 10, power amplifier 11, actuator 12, object 3, vibration sensor 13, amplifier 14, low-pass filter 15 and A/D converter 16. Alternatively, the delay circuit may be formed of an appropriate delay element, or may be dispensed with particularly when there is no significant delay in the signal a) above.

The resonance preventing circuit 19 shown in Fig. 1 is for preventing resonance of the vibration signal, and may have various arrangements as shown in Figs. 5-8.

Furthermore, the resonance preventing circuit 19 may be formed of a digital filter in which filter coefficients are written based on a particular impulse response which, for example, is obtained by measuring the transfer characteristic of the path including the D/A converter 9, low-pass filter 10, power amplifier 11, actuator 12, object 3, suspension 2, movable base member 1, vibration sensor 4, amplifier 5, low-pass filter 6 and A/D converter 7.

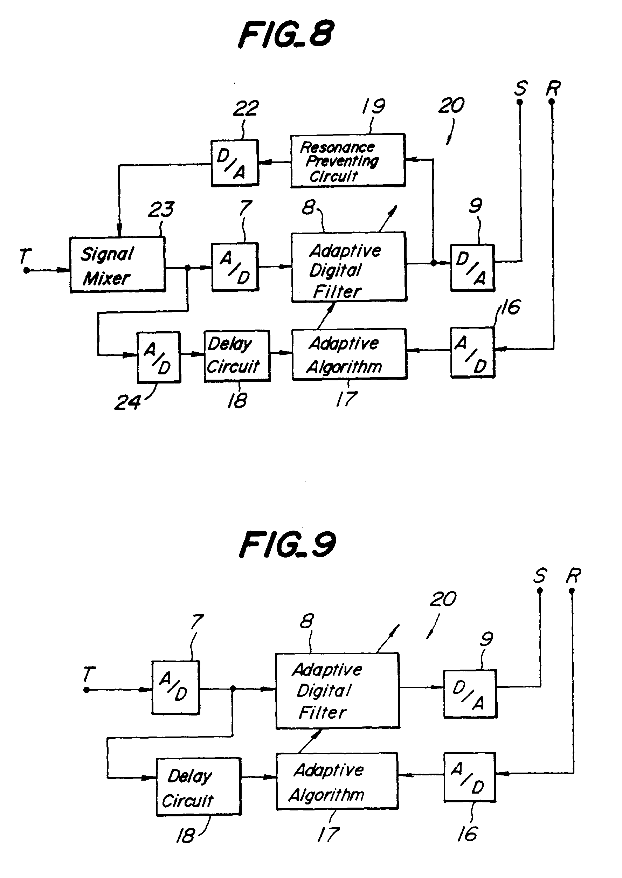

However, as shown in Fig. 9, the vibration control apparatus according to the invention may include an inverse vibration generating circuit 20 without the resonance preventing circuit 19.

In the vibration control apparatus shown in Fig. 1 or 10, the low-pass filter (LPF) 6, 10 or 15 may be replaced by a band-pass filter having its filter characteristics determined in accordance with system parameters of the object to be controlled, as well as control conditions and other environmental conditions.

Fig. 10 shows the arrangement of the vibration control apparatus wherein the adaptive-type filter mode shown in Fig. 1 has been switched into the fixed-type filter method.

With the vibration control apparatus which can be switched between the two filter modes, it is possible to carry out an adaptive vibration control in the adaptive-type filter mode shown in Fig. 1, and to switch the apparatus into the fixed-type filter mode shown in Fig. 10 after the vibration has been sufficiently reduced and the digital filter coefficients are substantially converged and then fixed.

The fixed-type filter mode shown in Fig. 10 is advantageous in that, because of a complete feed-forward control, an excellent vibration control can be achieved even in case of a pulsive vibration. Furthermore, under a particular circumstance wherein the characteristics of the object 3, suspension 2, vibration sensors 4, 13, actuator 12, etc. are maintained substantially unchanged, the fixed-type filter mode shown in Fig. 10 serves to reduce the vibration as effectively as the adaptive-type filter mode shown in Fig. 1.

In the fixed-type filter mode obtained after switching from the adaptive-type filter mode, when the vibration control deteriorates or becomes ineffective by some reason or other, the apparatus may be once again switched into the adaptive-type filter mode from the fixed-type filter mode, to vary the digital filter coefficients in accordance with the adaptive algorithm by the signal processor 17 and resume the optimum reduced vibration state.

In this manner, by using an adaptive-type digital filter 8 whose filter coefficients can be fixed, it is possible to switch the apparatus between adaptive-type filter mode and fixed filter mode, to fully utilize advantages of the respective modes for more effectively reducing the vibration, and to thereby realize a vibration control apparatus suitable for various application fields.

The present invention has been described with reference to a basic model for controlling one-dimensional vibration, though a plurality of such basic models may be combined to realize a more practical apparatus for controlling multi-dimensional vibration with multiple degrees of freedom.

In principle, a plurality of the above-mentioned vibration control apparatuses can be applied to the object whose multi-dimensional vibration is to be controlled. In this case, each apparatus includes vibration sensors and an actuator oriented in a direction in which the vibration is to be reduced. Of course, the number of the apparatuses corresponds to the degrees of freedom requiring vibration reduction. These apparatuses can be operated simultaneously to effectively reduce any multi-dimensional vibrations.

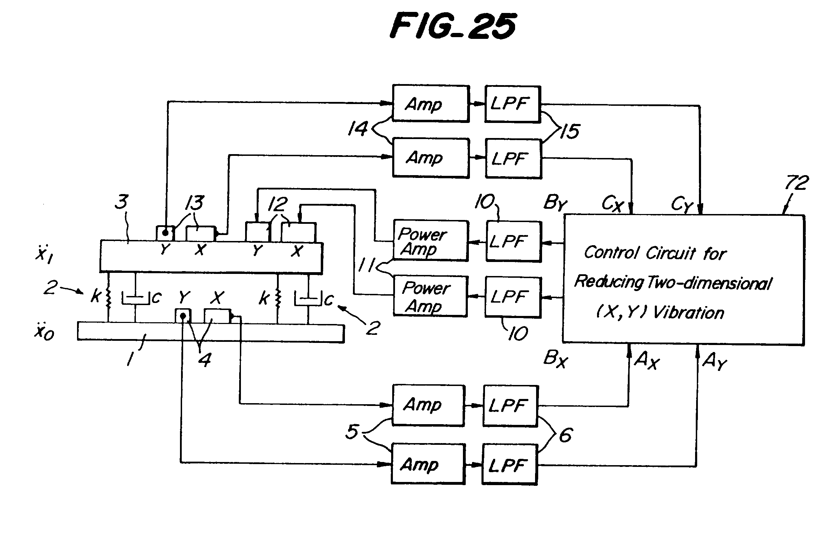

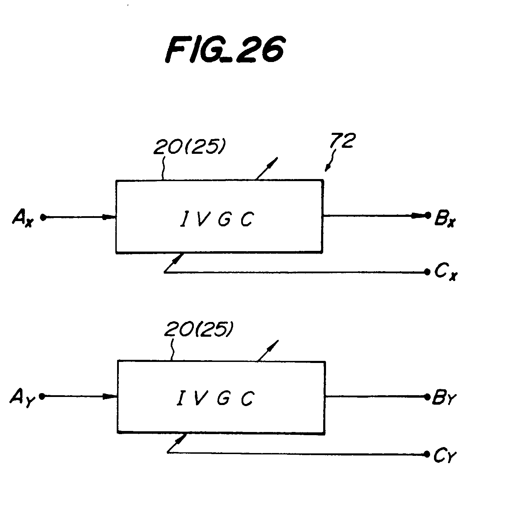

Fig, 25 is a block diagram showing the arrangement of an apparatus for controlling two-dimensional vibration. It will be understood that, by providing a pair of the above-mentioned apparatuses, vibrations in two directions X and Y can be reduced simultaneously. Here, as shown in Fig. 26, the vibration control circuit 72 (Fig. 25) may be formed of either two adaptive-type inverse vibration generating circuits 20 (Fig. 2) or two fixed-type inverse vibration generating circuits 25 (Fig. 4), for reducing the vibrations in the directions X and Y, respectively.

However, when the two dimensional vibrations are correlated with each other, an improved vibration reduction can be achieved by positively eliminating the correlative crosstalk components. In the case of the model shown in Fig. 25, there are two crosstalk components as follows.

i) Vibration component of the object 3 in the direction Y when the actuator applies the object with vibration in the direction X.
ii) Vibration component of the object 3 in the direction X when the actuator applies the object with vibration in the direction Y.

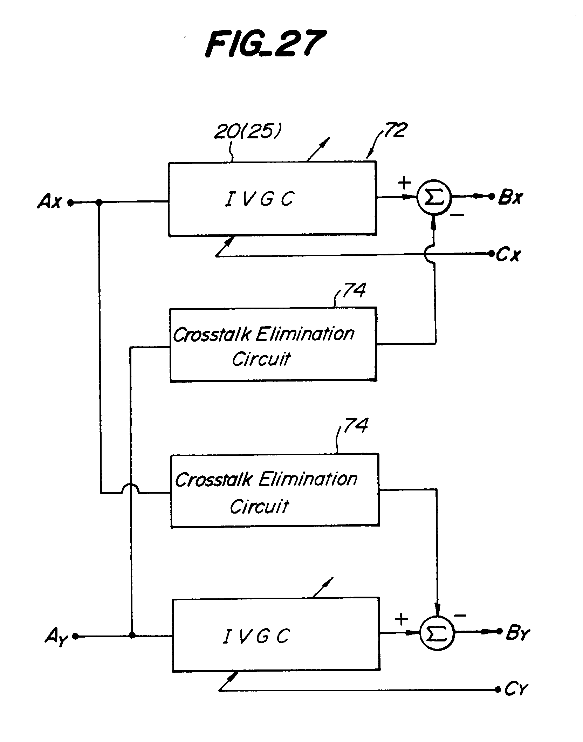

Thus, in order to eliminate these crosstalk components and achieve an improved vibration reduction, the vibration control circuit 72 (Fig. 25) may include crosstalk elimination circuits 74 as shown in Fig. 27.

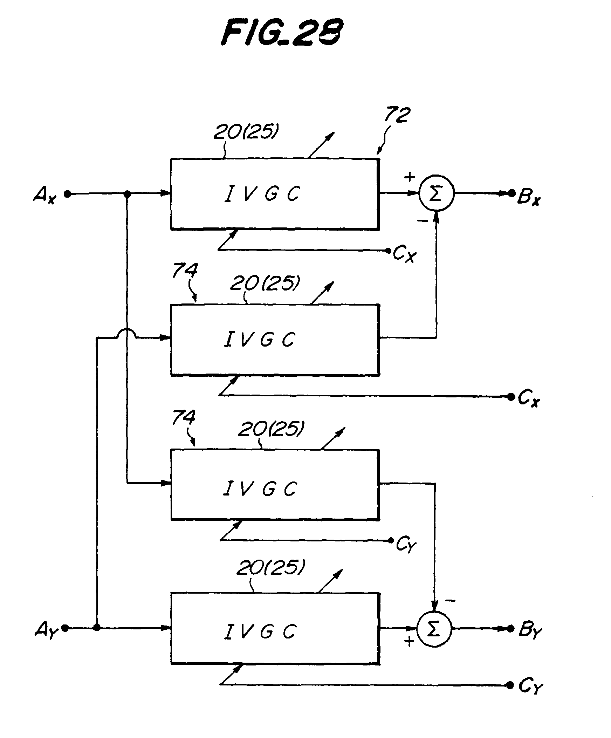

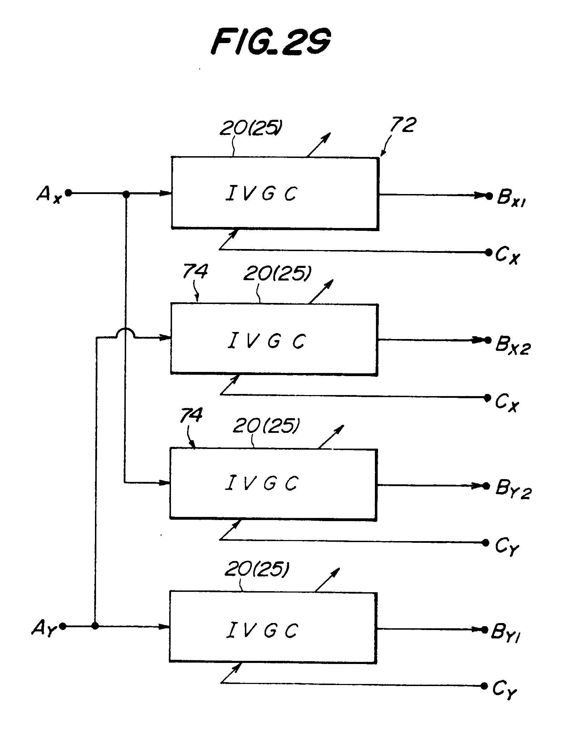

The crosstalk elimination circuits 74 may be each formed, for example, of adaptive-type inverse vibration generating circuit 20 or fixed-type inverse vibration generating circuit 25, as shown in Figs. 28 and 29.

The vibration control circuit 72 shown in Fig. 29 includes for each vibration direction two sets of actuators 12, power amplifiers 11 and LPFs 10, i.e. each four sets as a whole.

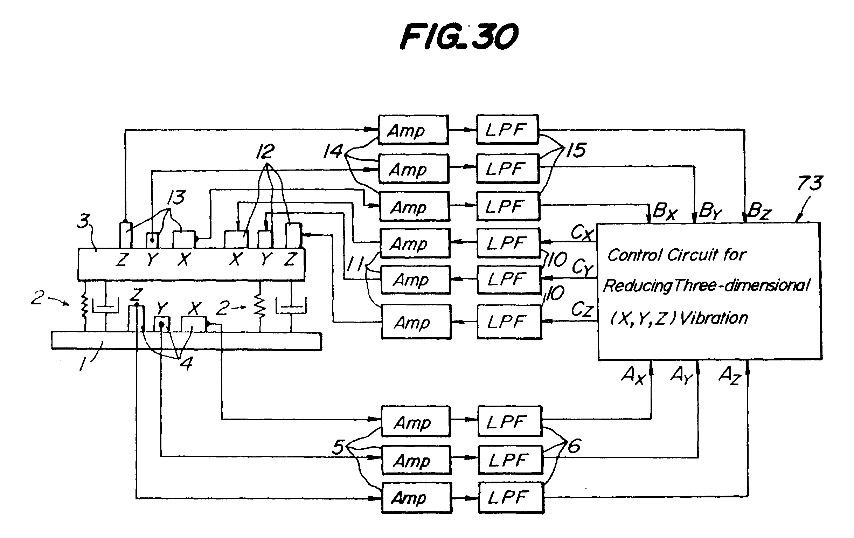

Fig. 30 is a block diagram showing the arrangement of an apparatus for controlling three-dimensional vibration. It will be appreciated that the control of the three-dimensional vibration can be effected essentially in the same manner as that for the two-dimensional vibration. In principle, by combining a set of three vibration control apparatuses, the three-dimensional vibration can be controlled simultaneously. Here, as shown in Fig. 30, the vibration control circuit 73 may be formed of either three adaptive-type inverse vibration generating circuits 20 (Fig. 2) or three fixed-type inverse vibration generating circuits 25 (Fig. 4), for reducing the vibrations in the directions X, Y and Z, respectively.

When the three dimensional vibrations are correlated with each other, an improved vibration reduction can be achieved by positively eliminating the correlative crosstalk components.

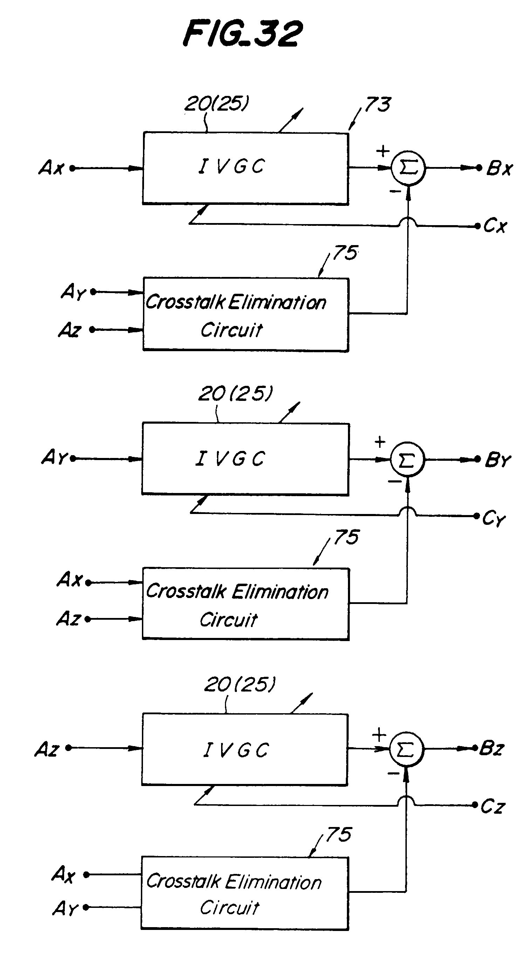

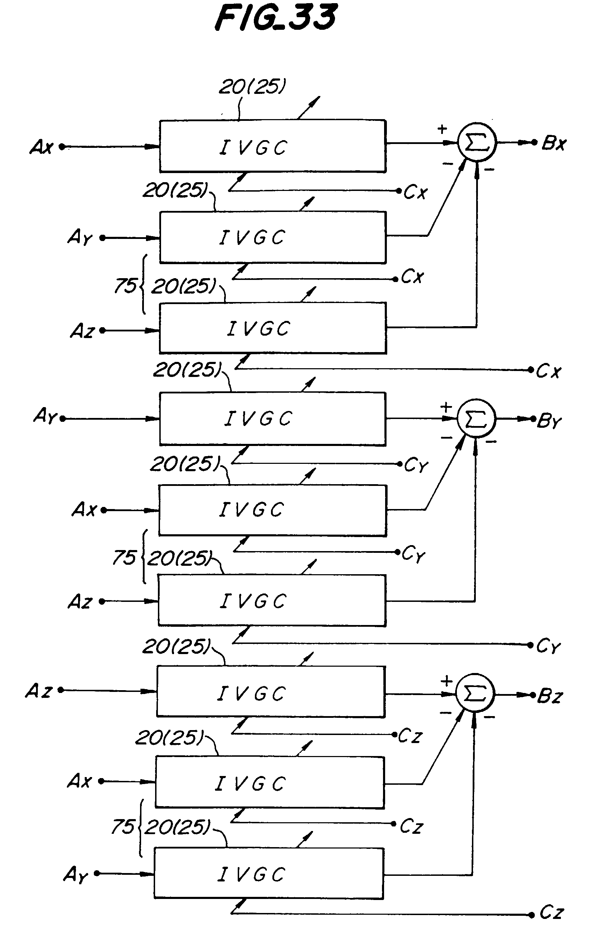

Fig. 32 is a block diagram of a control circuit 73 shown in Fig. 30, which is suitable for eliminating the crosstalk components. The crosstalk eliminating circuit 75 shown in Fig. 32 may be formed of adaptive-type or fixed-type inverse vibration generating circuits 20 or 25 as shown in Fig. 33, similar to the example of Fig. 28.

As can be appreciated from the foregoing explanation given with reference to two- and three-dimensional vibration control, the invention makes it possible to simultaneously control multi-dimensional vibration by combining a plurality of vibration control apparatuses each shown in Figs. 1-11, the number of which depends upon the degree of freedom to be controlled. In this case, also, it is desirable to achieve an improved vibration reduction using an appropriate crosstalk elimination circuit to positively eliminate the correlative crosstalk components.

Furthermore, theoretically speaking, there is no limit to the number of degrees of freedom in applying the vibration control apparatus according to the invention, although it is possible from a practical viewpoint to reduce the vibration in an optimum manner by controlling the vibration of 2-6 degrees of freedom.

It is of course possible that the number of the vibration control apparatuses and the control directions need not coincide with the number of degrees of freedom and the vibration direction, respectively, and may be determined without particular limitations provided that the vibration of the object can be sufficiently reduced. Generally, however, it is preferred to provide a number of vibration control apparatuses which is the same as or greater than the number of degrees of freedom so that they can be selectively operated whenever necessary.

The vibration control apparatus according to the invention is for actively canceling the vibration of the object 3 transmitted from the base member 1 via the suspension 2, by applying a controlled inverse vibration to the object 3 by means of the actuator 12, and is arranged such that the inverse vibration is subjected to a successive correction based on a signal representing the vibration of the object 3 itself or the vibration correlated to the latter, to maintain the optimum reduced vibration state. The apparatus thus features an active and adaptive control for reducing the vibration of the object 3.

Fig. 12 is a graph showing the response ratios

$$|\ddot{x}_1/\ddot{x}_0|$$

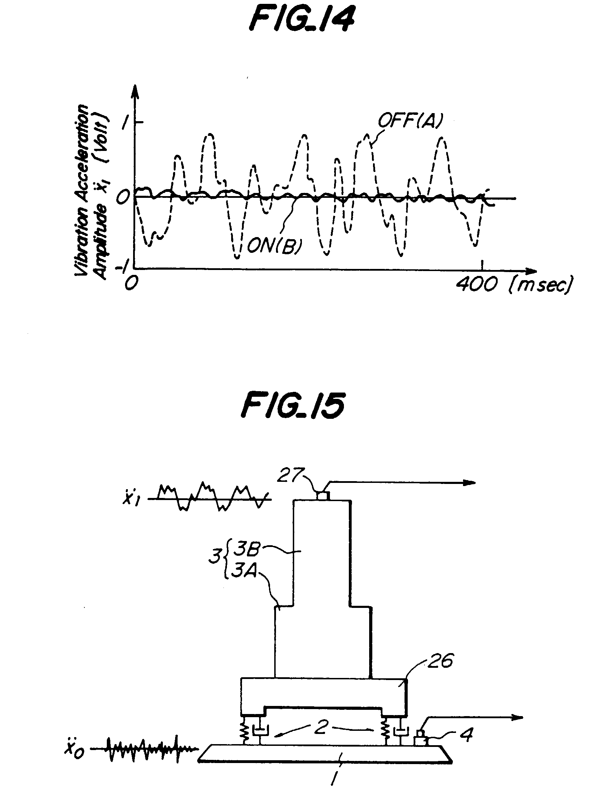

of the object 3 with reference to the movable base member 1 under condition (A) in which the vibration control apparatus with the arrangement shown in Fig. 1 is switched into OFF state so as not to effect the control, and condition (B) in which the vibration control apparatus is switched into ON state to effect the control. Furthermore, Fig. 13 is a graph showing the result of measurement of the vibration acceleration level $|\ddot{x}_1|$ of the object 3 corresponding to the conditions (A) and (B) in Fig. 12. While the results shown in Figs. 12 and 13 have been obtained by applying a random vibration input to the base member 1, it has been confirmed that similarly effective vibration reduction can be achieved also in the case of periodical vibration and vibration with variable period.

From these experimental results, it is clear that the present invention makes it possible to realize a resonance-free anti-vibration suspension device with a response ratio of 1.0 or less, as shown in Fig. 12, and to significantly reduce the vibration acceleration level $|\ddot{x}_1|$ of the object 3, e.g. by approximately 20dB at 5 Hz, thereby achieving a remarkable vibration reduction.

Fig. 14 is a graph showing the vibration acceleration amplitude of the object 3 under condition (A) in which the vibration control apparatus with the arrangement shown in Fig. 1 is switched into OFF state, and condition (B) in which the vibration control apparatus is switched into ON state and the filter coefficients of the adaptive-type digital filter 8 have been converged into constant values.

It is clear from Fig. 14 that the present invention makes it possible to significantly reduce the vibration acceleration amplitude and hence the amplitude of the object 3 to a low level of the order of noise level.

It has been further confirmed that even when the ON condition (B) has been maintained for five minutes and the filter coefficients of the adaptive-type digital filter 8 in the vibration control apparatus of Fig. 1 have then been fixed to effect switching into fixed-type digital filter 25 (Fig. 10), an excellent vibration reduction can be achieved as in the ON condition shown in the graphs of Figs. 12-14.

It is thus clear that, when the characteristics of the object 3, suspension 2, actuator 12 and vibration sensors 4, 13 remain substantially constant, once the filter coefficients of the adaptive-type digital filter have been converged, a subsequent switching into fixed-type digital filter mode still ensures an excellent vibration reduction.

The vibration control apparatus according to the invention will be explained below with reference to further embodiments which are applied to control the vibration of object with multiple degrees of freedom.

Fig. 15 shows one arrangement of an apparatus for controlling the vibration of an object with multiple degrees of freedom, having a substantial mass and arranged at a higher level of center of gravity, while Fig. 16 is a graph showing a typical frequency characteristic of the response ratio in the apparatus of Fig. 15, which features a plurality of peaks in the response ratio at corresponding frequencies f1, f2.

Such an object 3 can be regarded as a multiple freedom degree system comprising a lower half 3A and an upper half 3B. Incidentally, the object 3 is suspended by the suspension 2 via a table 26 fixedly secured to the bottom surface thereof.

In principle, the vibration of the object 3 in the model of Fig. 15 can be significantly reduced by using the vibration control apparatus shown in Fig. 1. In this case, it is desirable for each low pass filter 15, 10, 6 in Fig. 1 to have a frequency range which includes the peak frequencies f1, f2 in Fig. 16. Furthermore, as in the previous embodiments, the inverse vibration generating circuit 20 may be arranged as shown in Figs. 5-9.

In the model of Fig. 15, provision of a single inverse vibration application means (or inverse vibration generating circuit 20) alone may result only in a limited reduction of vibration in the case of the following two situations.

a) Situation wherein the object 3 includes, depending upon its configuration or weight distribution, a plurality of regions whose vibrations are to be subjected to reduction. (That is, vibration control of a single region alone would not readily result in a sufficient vibration reduction of the object 3 as a whole.)

b) Situation wherein a vibration component of the object 3 in one direction (e.g. direction X) has a correlation, depending upon its frequency band, to a vibration component of the base member 1 in another direction (e.g. direction Z).

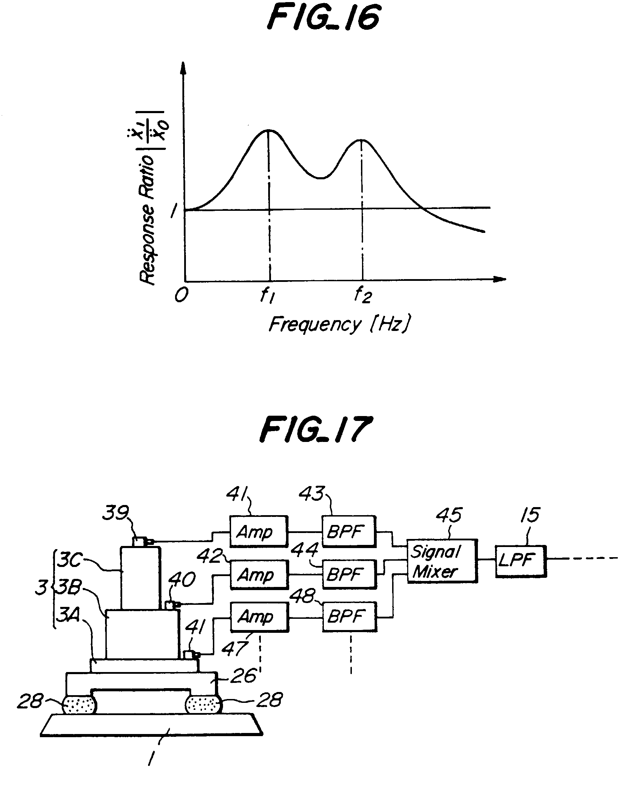

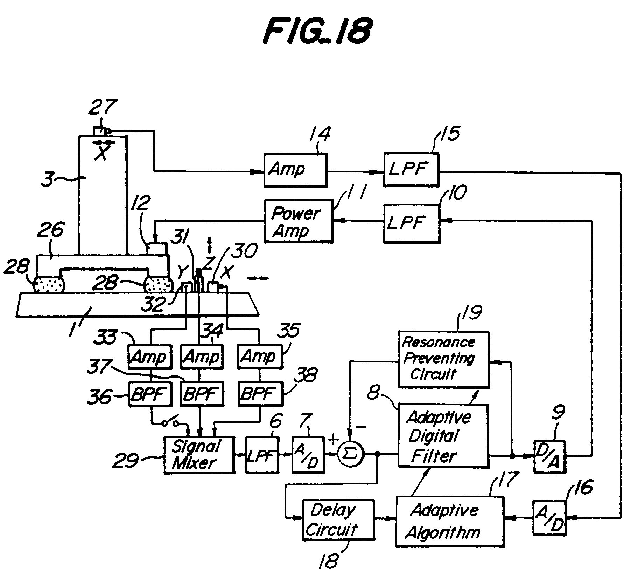

The above-mentioned situations a) and b) will be explained below with reference to Figs. 17-21. Fig. 17 is a block diagram of an arrangement wherein the vibration control apparatus according to the invention is used to control the vibration of an object 3 with a plurality of regions or multiple degrees of freedom, and Fig. 18 is a block diagram of an arrangement wherein the apparatus according to the invention is used to control vibration with multiple degrees of freedom or a plurality of vibration directions.

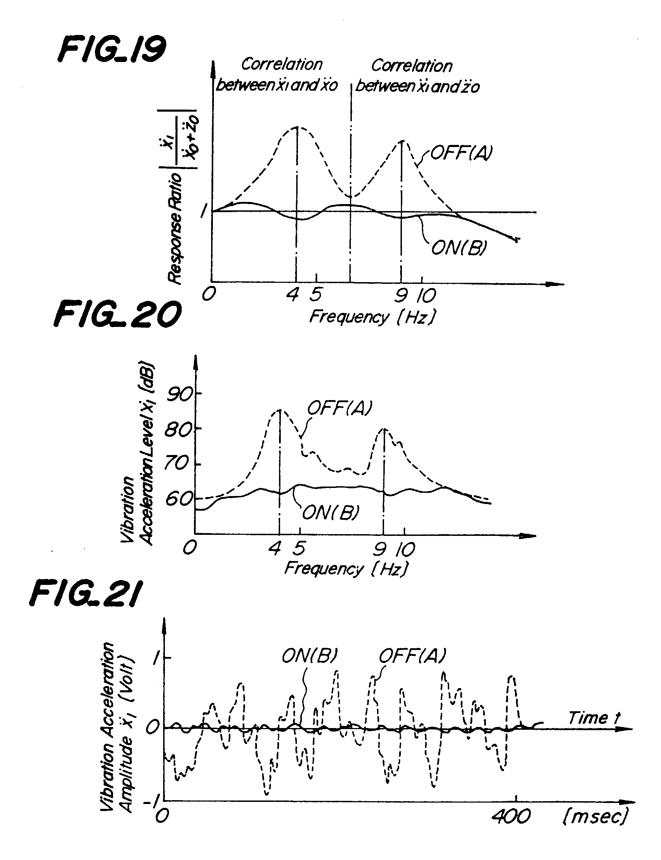

Furthermore, Figs. 19, 20 and 21 are graphs respectively showing the frequency characteristic of the response ratio, the frequency characteristic of the vibration acceleration level, and the waveform of the acceleration amplitude in the apparatus shown in Figs. 17 and 18.

As shown in Fig. 17 which corresponds to situation a) above, the object 3 as a whole can be regarded as including three regions 3A, 3B and 3C. In order to reduce the overall vibration of the object 3, the regions 3A, 3B and 3C are provided at respectively predetermined locations with vibration sensors 39, 40 and 49. These sensors 39, 40, 49 are connected to amplifiers 41, 42 and 47 for amplifying the signals generated by the sensors. The signals amplified by the amplifiers 41, 42 and 47 are passed through band-pass filters (BPF) 43, 44 and 48, if necessary, and then added with each other by means of a signal mixer 45.

By supplying the mixed signal from the mixer 45 as an input signal to the adaptive digital filter 8 (Fig. 18) of the vibration control apparatus according to the invention, it is possible to effectively reduce the vibration of the object 3 shown in Fig. 17 as a whole.

From a practical viewpoint, the vibration sensors 39, 40, 49, amplifiers 41, 42, 47, band-pass filters 43, 44, 48, etc., are preferably minimized in number while enabling the overall vibration of the object 3 to be reduced.

If necessary, the band-pass filters (BPF) 43, 44, 48 shown in Fig. 17 may be replaced with high-pass filters or low-pass filters. Alternatively, when the band-pass filters are not required, the amplifiers 41, 42, 47 may be directly connected to the mixer 45.

Fig. 18 corresponds to the situation b) above, wherein the object 3 is formed of a hollow columnar steel body of size of $0.5 \times 0.5 \times 1.2$ m and of weight of 480 kg. The object 3 is arranged on and fixedly secured to a table 26 which, in turn, is supported by four vibration-insulating rubber members 28. By measuring the vibration of the object 3, it has been found that there are resonance peaks at two points near 4 Hz and 9 Hz.

The direction in which the vibration is to be controlled is the horizontal axial direction X, as shown in Fig. 18. Thus, it is necessary for the vibration control apparatus of Fig. 18 to simultaneously reduce the two resonance peaks near 4 Hz and 9 Hz.

To this end, measurement has been carried out to determine the transfer functions (hence, coherence) between the vibration in the directions X, Y and Z of the base member 1 and the vibration in the direction X of the object 3. It has thus been found that the resonance peaks near 4 Hz and 9 Hz of the vibration component in the direction X of the object 3 exhibit significant correlation with the vibration components in the directions X and Z of the base member 1, respectively, with correlation factors of substantially 1.

As explained above with reference to Figs. 15 and 16, in order to control the vibration of the object 3 having a plurality of resonance peaks f1, f2 (i.e., near 4 Hz and 9 Hz in the arrangement of Fig. 18), it is generally necessary to provide a plurality of sets of vibration control apparatuses (inverse vibration application means) of a number which corresponds to that of the peaks. However, as in the above-mentioned case of Fig. 18, when the two resonance peaks are respectively correlated with vibration components in different directions (X and Z), the vibration near the two peaks can be effectively and simultaneously reduced with a single set of vibration control apparatus in the following manner.

That is, as shown in Fig. 18, two kinds of vibration signals of the base member 1 are detected, one being the vibration in the direction X for controlling the 4 Hz peak and the other being the vibration in the direction Z for controlling the 9 Hz peak, and these signals are passed through the band-pass filters 37, 38, respectively, and added with each other by the mixer 29. This makes it possible to significantly reduce the vibration near the 4 Hz and 9 Hz peaks simultaneously with a single set of vibration control apparatus.

While the vibration components in the model of Fig. 18 were in the directions X and Z, if the vibration component in the direction Y also is required, the component in that direction is to be detected by the sensor 32 whose output signal is passed through the amplifier 33 and filter 36 and is then supplied to the mixer 29 in a similar manner.

In this case, among the vibration components of the base member 1, it is desirable to effect mixing of only the signals representing the vibration components with significant correlation to the vibration of the object 3.

Figs. 19 and 20 are graphs respectively showing the response ratio

$$\left|\ddot{x}_1/\ddot{x}_0\right|$$

of the object 3 with reference to the movable base member 1 and the vibration acceleration level of the object 3, both under condition (A) in which the vibration control apparatus with the arrangement shown in Fig. 18 is switched into OFF state, and condition (B) in which the vibration control apparatus is switched into ON state and the filter coefficients of the adaptive digital filter 8 have been converged.

In obtaining the result shown in Fig. 19, the vibration of the movable base member 1 has been represented by the output signal from the mixer 29, which has been obtained by mixing the signals corresponding to the vibration components in the directions X and Z.

From these experimental results, it is clear that the present invention makes it possible to significantly reduce the two resonance peaks (near 4 Hz and 9 Hz) in the frequency range of 12 Hz or less of the object 3, to realize a resonance-free state with a response ratio of 1 or less, as particularly shown in Fig. 19. It is also clear that the present invention makes it possible to significantly reduce the vibration acceleration $\ddot{x}_1$ of the object 3.

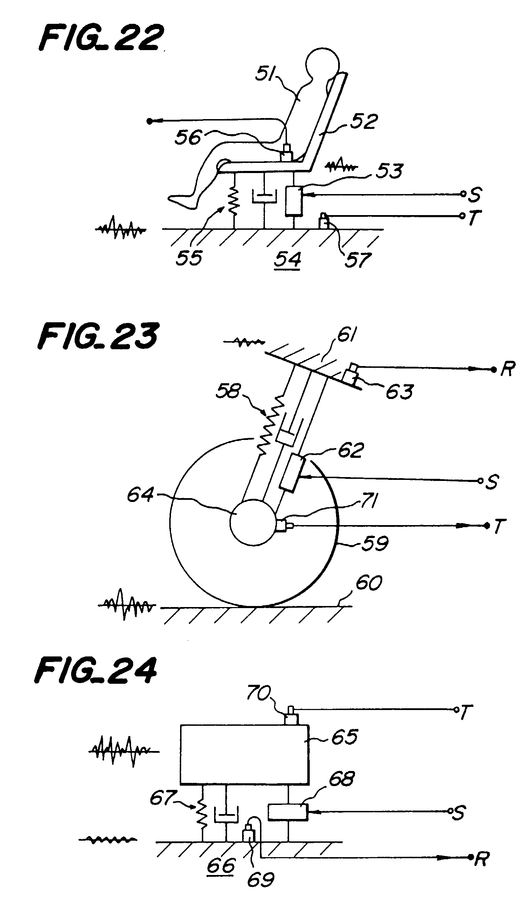

Fig. 21 is a graph showing the vibration acceleration amplitude of the object 3 under the condition (A) in which the vibration control apparatus with the arrangement is switched into OFF state, and condition (B) in which the vibration control apparatus is switched into ON state and the filter coefficients of the adaptive digital filter 8 have been converged. The experimental results shown in Fig. 22 also reveal clearly that it is possible according to the invention to significantly reduce the vibration amplitude of the object 3 to as low as noise level.

Furthermore, in the arrangement shown Fig. 18, by supplying the adaptive digital filter with an input signal representing the vibration component of the base member 1 in one direction only, without using the mixer 29, the following has been confirmed. That is, when the input signal corresponds to the vibration component in the direction X, it was possible to significantly reduce the 4 Hz resonance peak, though the 9 Hz peak could not be reduced and remained substantially on the same level as in the OFF state of the vibration control. On the other hand, when the input signal corresponds to the vibration component in the direction Z, the 4 Hz peak could not be reduced and remained substantially on the same level as in the OFF state of the vibration control, though it was possible to significantly reduce the 9 Hz peak.

When, as in the model of Fig. 18, the vibration of the object 3 exhibits a plurality of resonance peaks having correlation to the vibration components of the base member 1 in different directions (X, Y, Z), the wide range vibration of the object 3 including the peaks can be significantly and simultaneously reduced by adding signals corresponding to the correlated vibration components of the base member 1 by means of the mixer 29, and using the mixed signal as an input signal to the adaptive digital filter 8.

While the above-mentioned embodiments deal with the vibration control of the object in one direction, it is also possible to simultaneously reduce a multi-dimensional vibration by using a plurality of sets of the vibration control apparatuses according to the invention. For example, when it is necessary in the arrangement of Fig. 1 or 18 to reduce the vibration of the object 3 in a three-dimensional sense in the directions. X, Y and Z, the combination of two or more sets of the vibration control apparatuses according to the invention can be used to significantly and simultaneously reduce the vibration components of the object 3 in the three directions.

Furthermore, when the object 3 is complicated in configuration and includes, for example, a plurality of regions as shown in Fig. 17, it is also possible to significantly reduce the overall vibration of the object 3, using a signal obtained by mixing the signals corresponding to the vibrations of the regions by means of the mixer 45 (Fig. 17).

The vibration control apparatus according to the the previous embodiments has been generally explained as including elements shown in the block diagrams, serving to reduce the vibration which is transmitted from the base member 1 to the object 3 via the suspension 2. In the following, some practical examples dealing with various application fields of the invention will be explained.

Fig. 22 shows a model applied to the vibration control of a seat in a vehicle, such as an automobile, an aircraft, a vessel, etc. A passenger 51 is seated on a seat 52 to which is transmitted a vibration from a vehicle frame 54 via a suspension 55. A vibration sensor 56 is secured to the seat 52 which is applied with an inverse vibration by an actuator 53 based on the vibration of the seat as detected by the sensor 56.

Fig. 23 shows a model applied to the vibration control of a sprung mass 61 above a suspension 58. Here, vibration is transmitted from a road surface 60 via a tire 59 and a suspension 58 to the sprung mass 61, and is reduced by an applying an inverse vibration by means of an actuator 62. The actuator is operated based on the vibration of the sprung mass 61 as detected by a vibration sensor 63 secured to the mass 61, and the vibration of the unsprung mass 64 detected by a vibration sensor 71 secured to the mass 64.

Fig. 24 show a model applied to the control of vibration generated by an engine 65 in a vehicle, such as an automobile, an aircraft, a vessel, etc. The engine 65 as a vibration source corresponds to the movable base member 1, and is mounted on a vehicle frame 66 via a vibration-isolating suspension 67. In this case, the frame 66 forms an object 3 whose vibration is to be reduced. The vibration which is transmitted from the engine 65 via a suspension 67 to the frame 66 can be effectively reduced by application of inverse vibration to the frame 66 by means of an actuator 68. To this end, the frame 66 and the engine 65 are respectively provided with vibration sensors 69 and 70.

Another embodiment of the vibration control apparatus according to of the invention will be explained below with reference to Fig. 34, which is a block diagram showing a basic arrangement similar to that of Fig. 10.

The apparatus is for reducing the vibration of an object 103 mounted on a table 104 which is supported on a base member 101 by a suspension 102. The apparatus includes vibration sensors 105, 106 secured to the table 104 and the object 103, respectively. The sensor 105 is connected to an amplifier 108 which, in turn, is connected to a low-pass filter 111. Similarly, the sensor 106 is connected to an amplifier 109 which, in turn, is connected to a low-pass filter 113. The output signals of these low-pass filters 111, 113 are supplied to an adaptive-type inverse vibration generating circuit (IVGC) 114 whose output signal is supplied to an actuator 107 via a low-pass filter 112 and a power amplifier 110.

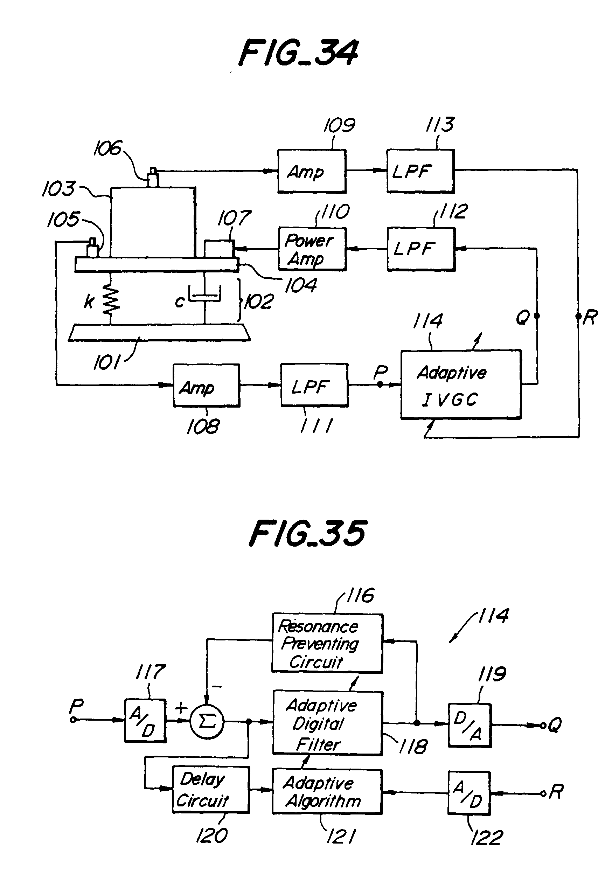

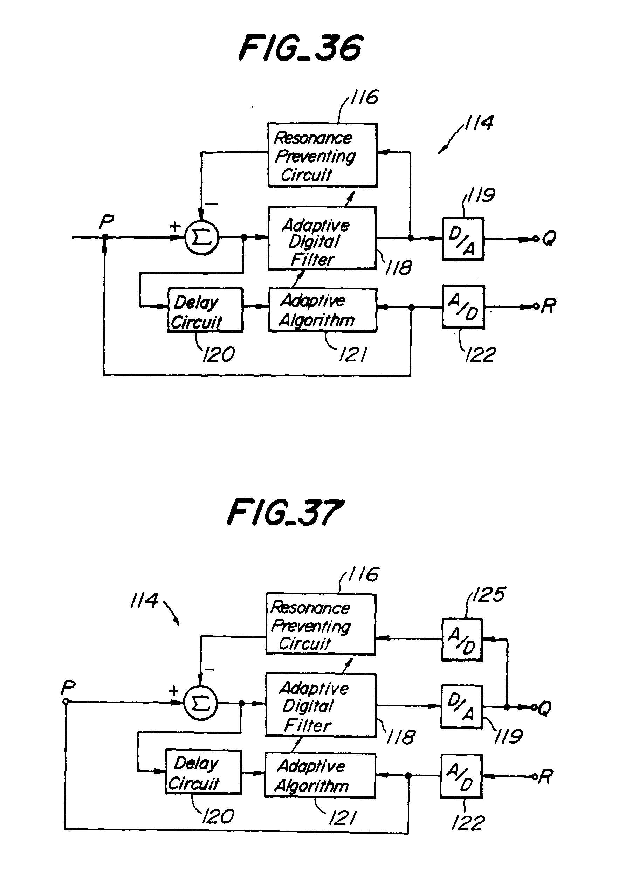

As shown in Figs. 35-37 which are similar to Figs. 5-9, the inverse vibration generating circuit 114 may include an adaptive-type digital filter 118, a signal processor 121 for executing adaptive algorithm, A/D converters 117, 122, a D/A converter 119, a resonance preventing circuit 116 and a delay circuit 120.

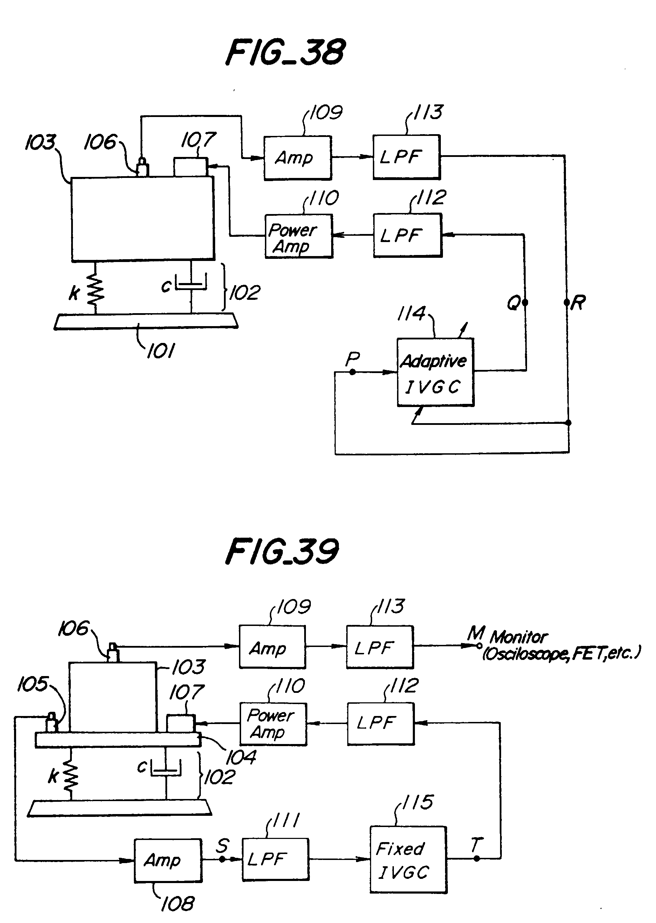

When the object 103 is formed of a substantially rigid body and directly mounted on the table 104 without vibration-isolating means therebetween such that they vibrate jointly, or when the object 103 is directly supported by the suspension 102 without the table 104, the vibration control apparatus according to the embodiment of Fig. 34 may be modified as shown in Fig. 38.

Referring to Figs. 34 and 38, the resonance preventing circuit 116 included in the inverse vibration generating circuit 114 will be explained below.

That is, when the apparatus includes a closed loop wherein the inverse vibration applied by the actuator 107 to the table 104 is detected by the sensor 105, passed through the digital filter 118 and supplied again to the actuator 107, there is an undesirable tendency of resonance to deteriorate the stability of the apparatus.

It is thus advantageous to provide the resonance preventing circuit 116 by which vibration component originated from the actuator 107 is subtracted from the vibration signal detected by the sensor 105, so that only the signal representing the vibration transmitted from the table 104 is supplied to the adaptive-type digital filter 118.

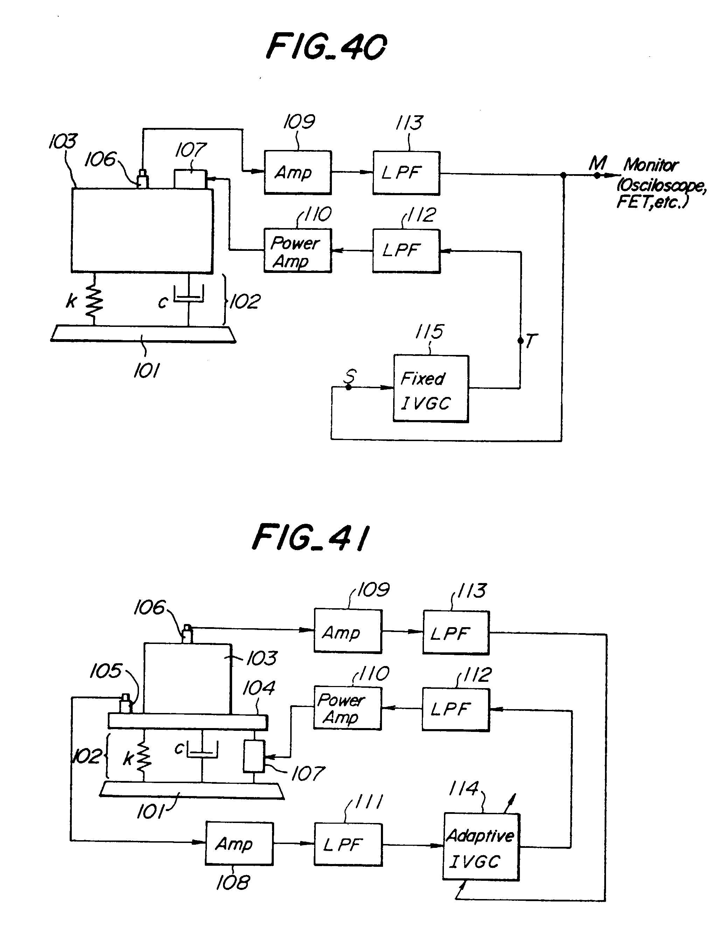

Figs. 39 and 40 are block diagrams corresponding to those of Figs. 34 and 38, respectively, wherein the filter coefficients of the adaptive-type digital filter 118 in the inverse vibration generating circuit 114 are fixed in order to form a fixed-type inverse vibration generating circuit 115.

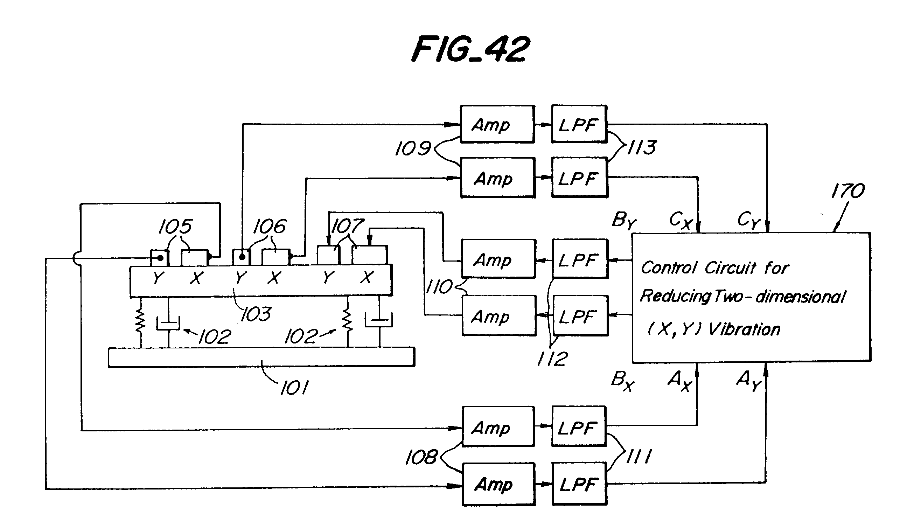

Fig. 41 is a block diagram showing another embodiment of a vibration control apparatus according to the invention which is similar to that of Fig. 34, but in which the actuator 107 is arranged at a different location, i.e. between the base member 101 and the table 104, as in the embodiment of Fig. 11.

The embodiments explained with reference to Figs. 34 and 38-41 proved to achieve excellent vibration reduction characteristics which are substantially the same as those shown in Figs. 12-14.

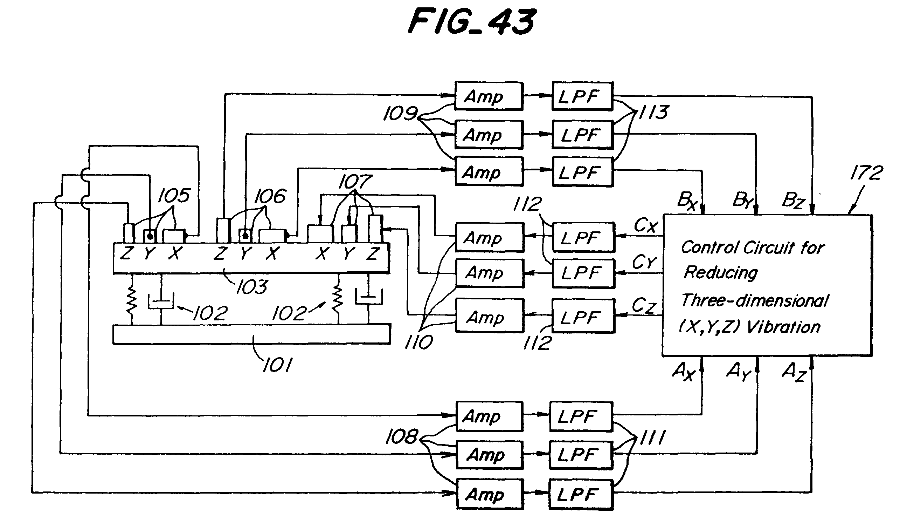

Fig. 42 is a block diagram similar to Fig. 25, showing another example of a basic arrangement of a circuit for reducing two-dimensional vibration in the vibration control apparatus according to the invention. Furthermore, Fig. 43 is a block diagram similar to Fig. 39, showing another example of a basic arrangement of a circuit for reducing three-dimensional vibration in the vibration control apparatus according to the invention.

The present invention can also be effectively applied to actively control vibrations of a plurality of objects simultaneously, which are mounted on a movable base member and connected either in series or parallel with each other. Embodiments of such particular applications will be explained below.

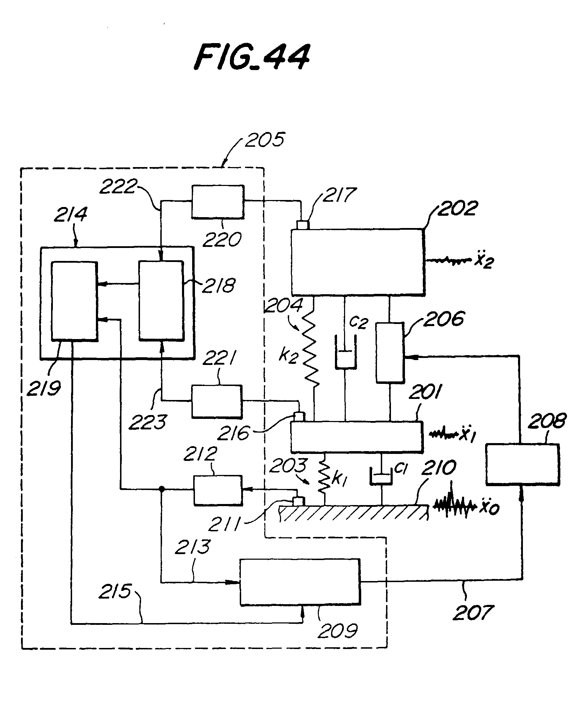

Fig. 44 is a block diagram showing one embodiment of the apparatus according to the invention, which is for controlling the vibration of two objects 201 and 202 stacked one above the other. More particularly, the object 201 is supported on a movable base member 210 (vibration source) via a vibration-isolating suspension 3 including a spring $k_1$ and a damper $c_1$, while the object 202 is supported on the object 201 via another vibration-isolating suspension 4 including a spring $k_2$ and a damper $c_2$.

An actuator 206 is arranged between the objects 201, 202 for actively applying vibration to these objects. The actuator 206 is driven by a driver 208 which is supplied with a signal 207 from a digital filter 209 of an adaptive-type vibration control system 205. The digital filter 209 is supplied with a signal 213 from an amplifier 212, which is for amplifying the output signal of a vibration sensor 211 secured to the base member 210. The digital filter 209, which may be of FIR-type, IIR-type or combination thereof, is so arranged that the filter coefficients of the digital filter 209 can be properly varied on a real-time basis in a successive manner, based on a control signal 215 from an adaptive control circuit 214.

The control signal 215 is for controlling the digital filter 209 to select the optimum filter coefficients and to thereby minimize the sum of the vibration errors of the objects 201, 202 from zero level.

The objects 201, 202, whose vibrations are to be reduced, are provided with vibration sensors (monitor sensors) 216, 217. The output signals from the sensors 216, 217 are respectively amplified by amplifiers 220, 221 and are then supplied to the adaptive control circuit 214. More particularly, first of all, errors from zero level of output signals 222, 223 of the amplifiers 220, 221 are calculated and added by an error operating circuit 218. The added error is then supplied to an adaptive control signal generating circuit 219 which generates and supplies to the digital filter 209 the abovementioned control signal 215 for rewriting the filter coefficients of the digital filter 209 so as to minimize the error.

The error operating circuit 218 may, for example, be a circuit having a function to calculate square error from zero level of each input signal 222, 223, and then calculate the sum of the square errors. Instead of the zero level, the square errors may be calculated with reference to a predetermined waveform. Moreover, instead of mean square error, other error standards may be used. In particular, not only errors in time domain of the signal, but also errors in frequency domain may be used by means of the FFT (Fast Fourier Transformation) method or the like.

In the adaptive control signal generating circuit 219, the least mean square (LMS) method may for example be used to determine the filter coefficients of the digital filter 209 so as to minimize the error calculated by the error operating circuit 218. Furthermore, the calculation method for determining the filter coefficients may be any other type of optimizing calculation algorithm.

Thus, the adaptive control circuit 214 in the vibration control system 205 serves to determine the filter coefficients of the digital filter 209 to minimize the signals representing the vibrations of the objects 201, 202 which are stacked with each other.

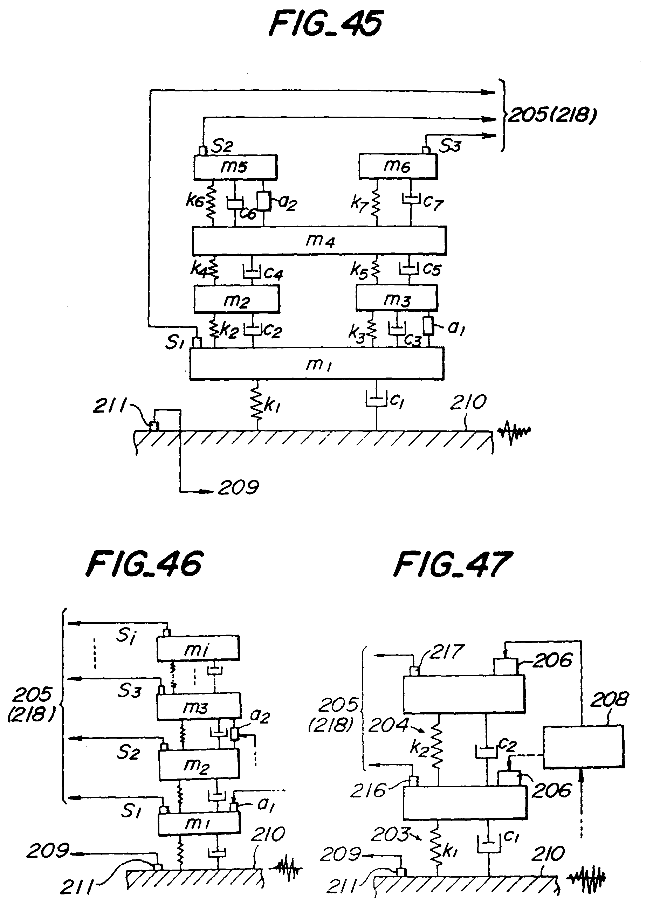

Figs. 45, 46 and 47 illustrate variations of the arrangement of Fig. 44, which also serve to simultaneously reduce the vibrations of a plurality of objects $m_1$, $m_2$, ⋯. The objects are shown as being arranged in multiple stages, with some of the objects being optionally arranged in parallel connection (Fig. 45). In the example of Fig. 47, actuators 206 are secured to the objects themselves as inertia mass actuators. In these examples also, monitor sensors $s_i$ are secured to a plurality of selected objects $m_i$ whose vibrations are to be reduced, and actuators $a_i$ (206) are either arranged between these objects $m_i$, or connected to appropriate locations thereof. The output signals from the monitor sensors $s_i$ are supplied to the error operating circuit 218 in the control circuit (Fig. 44) of the adaptive-type vibration control system 205, while the output signal from the vibration source sensor 211 on the base member 210 is supplied to the digital filter 209 of the system 205, thereby to simultaneously reduce the vibrations of a plurality of predetermined objects $m_i$.

The apparatus for reducing vibrations of a plurality of objects may include, if necessary, a plurality of sets for each of actuator drivers 208 corresponding to respective actuators $a_i$, digital filters 209 and adaptive control circuits 214.

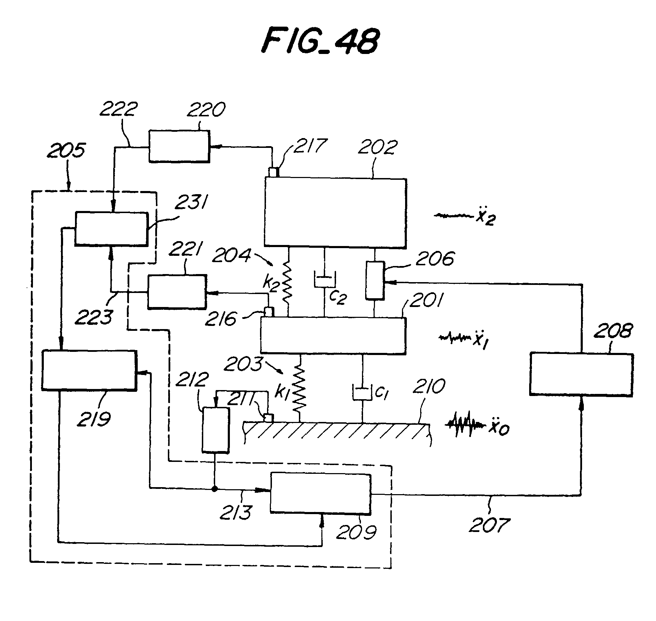

Fig. 48 is a block diagram showing another embodiment of the invention wherein the error operation circuit 218 in Fig. 44 is replaced by a signal mixer 231. That is, the output signals of the amplifiers 220, 221 connected to the monitor sensors 216, 217 are supplied to the signal mixer 231 where they are mixed with each other. The output signal of the signal mixer 231, in turn, is supplied to the adaptive control signal generating circuit 219 in order to calculate the control signal 215 for rewriting the filter coefficients of the digital filter 209.

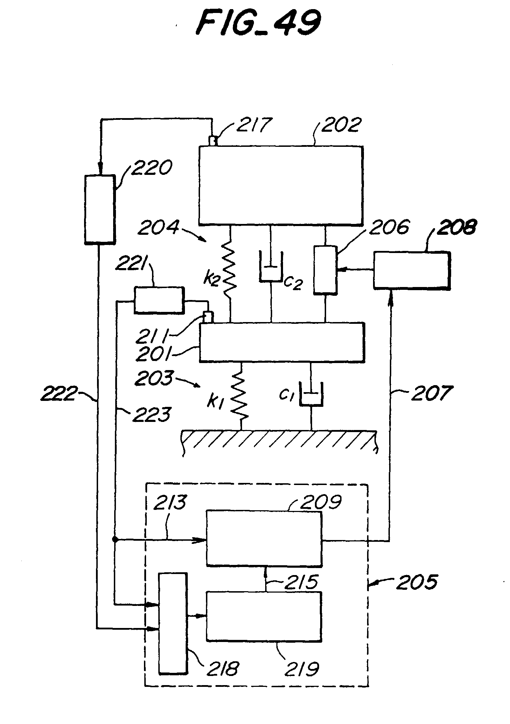

Fig. 49 is a block diagram showing still another embodiment of the present invention, wherein the vibration source sensor 211 is secured to the object 201 to function as a monitor sensor also. The output signal of the sensor 211 is supplied to both the digital filter 209 and the error operating circuit 218. The output signal from a monitor sensor 217 secured to another object 202 is supplied to the error operating circuit 218.

The adaptive control signal generating circuit 219 determines the filter coefficients of the digital filter 209 such that the error calculated by the error operating circuit 209 can be minimized, and the so determined filter coefficients are then transmitted to the digital filter 209 as a control signal 215.

The vibration source sensor 211 secured to the object 201 generates a signal which is passed through the digital filter 209 and supplied to the actuator driver 208 to drive the actuator 206 and thereby control the vibrations of the objects 201 and 202.

Thus, the arrangement shown in Fig. 49 includes feed-back elements for performing a feed-back control of the vibration of the lower object 201 with the adaptive-type filter, as well as feed-forward elements for performing a feed-forward control of the vibration of the upper object 202, the two types of the control being simultaneously carried out to achieve effective reduction of the vibrations of the lower and upper objects 201, 202.

The arrangement shown in Fig. 49 can be applied to vibration control of a plurality of objects connected with each other as shown in Figs. 45-48. In this case also, the apparatus for reducing vibrations of a plurality of objects may include a plurality of sets for each of actuators $a_i$, actuator drivers 208, digital filters 209 and adaptive control circuits 214. Furthermore, the digital filter 209 may be of FIR-type, IIR-type or combination thereof. The filter coefficients of the digital filter 209 may be properly controlled in accordance with the vibration environment, e.g. by switching from adaptive mode to fixed mode, and vice versa.

In the embodiment shown in Figs.44-49, the vibration applied to the movable base member 210 may be a random vibration, periodic vibration, pulsive vibration, etc. The vibration control apparatus according to the invention is effective to any type of vibration.

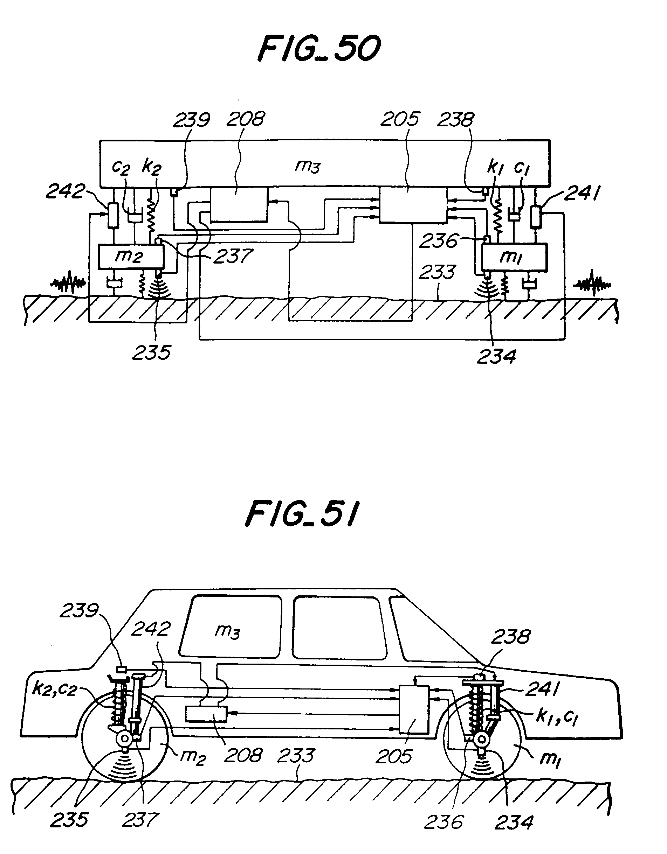

Fig. 50 is a block diagram showing an application of the invention to an automobile suspension system. Here, the road surface 233 corresponds to the movable base member 210 in Fig. 44, and the vibration of the road surface relative to the automobile is detected on real-time basis by non-contact type roadsurface sensors 234, 235 and unsprung mass monitor sensors 236, 237 both on front and rear sides, whose output signals are supplied to the adaptive-type vibration control system 205.

Monitor sensors 236, 237, 238, 239 are secured to unsprung mass $m_1$, $m_2$ (axle, wheel, etc.) and sprung mass $m_3$ (vehicle body, engine, etc.), and the output signals of these sensors are supplied to the control system 205 in order to determine on real-time basis the filter coefficients of the digital filter 209 such that the output signals (or errors from predetermined value) can be minimized.

When the digital filter 209 is supplied with the signals from the road surface sensors 234, 235, hydraulic actuators 241, 242 on front and rear sides are driven by respective actuator drivers 208 to apply inverse vibrations to the unsprung mass $m_1$, $m_2$ and sprung mass $m_3$.

The application of inverse vibrations serve to significantly reduce vibrations of both the sprung mass and unsprung mass of the vehicle transmitted from the road surface 233 to improve driver's and passengers' comfort and maneuvability of the vehicle. In this case, as the road surface condition varies from time to time, the filter coefficients of the digital filter 209 are caused to change accordingly so as to effect an adaptive control and optimize or minimize the vibration.

The road surface sensors 234, 235 are generally secured to axles, and may each be formed of an ultrasonic sensor, laser sensor, etc.

The hydraulic actuators 241, 242 on front and rear sides are connected either in series or parallel with relevant spring $k_1$, $k_2$ and shock absorber $c_1$, $c_2$ of the suspensions, and arranged between the unsprung mass $m_1$, $m_2$ and sprung mass $m_3$. However, they may be secured to the unsprung mass $m_1$, $m_2$ or sprung mass $m_3$ as inertia-mass type actuator, provided that a necessary inverse vibration can be applied by such an arrangement. Furthermore, the actuators 241, 242 may be replaced by pneumatic actuators adapted to vary the pneumatic spring inner pressure.

Fig. 51 is a schematic view showing an actual example of the arrangement of Fig. 50. In this case, the hydraulic system including hydraulic actuators 241, 242 may be operated by hydraulic pressure used generally for a power steering device or the like.

The circuit for the adaptive-type vibration control system 205 may have a compact arrangement of a single- or twin-board, and be driven by batteries mounted on the vehicle as an electric power source.

The abovementioned application of the invention to an automobile suspension system shown in Fig. 51 makes use of the arrangement of Fig. 44, though the arrangement of Fig. 49 may be applied to such a system when the road surface sensors 234, 235 are omitted. In this case, the objects 201, 202 in Fig. 49 correspond to the unsprung mass $m_1$, $m_2$ and sprung mass $m_3$, respectively.

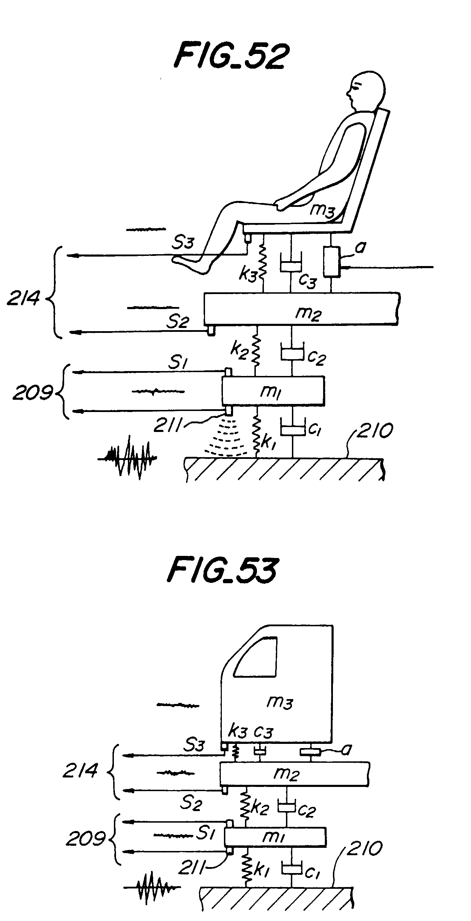

Fig. 52 is a schematic view showing a model wherein a seat $m_3$ of a vehicle, such as an automobile or aircraft, is supported on the vehicle body (sprung mass $m_2$) via a spring $k_3$ and a damper $c_3$, and is applied with inverse vibration by an actuator a to reduce the vibration.

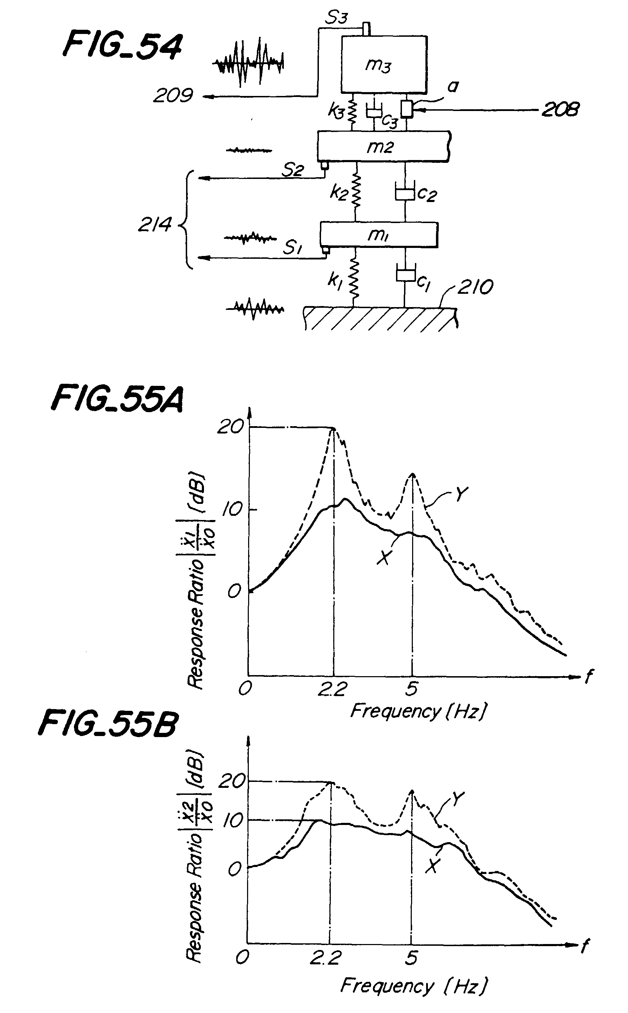

Fig. 53 is a schematic view showing a model wherein a cabin $m_3$ of a truck is supported on the vehicle body (sprung mass $m_2$) via a cabin suspension including a spring $k_3$ and a damper $c_3$, and is applied with inverse vibration by an actuator a to reduce the vibration.

Application of the invention to such suspension systems makes it possible to significantly reduce the vibration transmitted from the road surface 210 to the seat or cabin $m_3$ via tire/wheel assembly $m_1$, $k_1$, $c_1$.

Fig. 54 is a schematic view showing a model for simultaneously reducing the vibration transmitted from the road surface 210 to the vehicle body $m_2$ via tire/wheel assembly $m_1$, $k_1$, $c_1$, and also the vibration transmitted from an engine $m_3$, which is supported on the vehicle body $m_2$, to the vehicle body $m_2$ via engine mount $k_3$, $c_3$. In this case, the actuator a for applying the inverse vibration is arranged between the vehicle body $m_2$ and the engine $m_3$, in parallel with the assembly $k_1$, $c_1$, though it may be secured to the object $m_1$ itself as an inertia-mass type actuator. Application of the invention to such an arrangement also makes it possible to significantly reduce the vibrations transmitted from the road surface 210 and engine to the vehicle body $m_2$.

Figs. 55A and 55B are graphs showing the frequency characteristics of the vibration acceleration response ratio versus the vibration acceleration $\ddot{x}_0$ of the movable base member 210, under situation (X) in which the adaptive-type vibration control according to the invention is effected, and situation (Y) without the adaptive-type vibration control. Fig. 55A corresponds to the re-

sponse ratio

$$|\ddot{x}_1/\ddot{x}_0|$$

of the lower object 201, and Fig. 55B corresponds to the response ratio

$$|\ddot{x}_2/\ddot{x}_0|$$

of the lower object 202. It is clear that, for both of the objects 201, 202, it is readily possible to significantly reduce the vibration by 10-20dB at two resonance peak frequencies of near 2.2 Hz and 5 Hz.

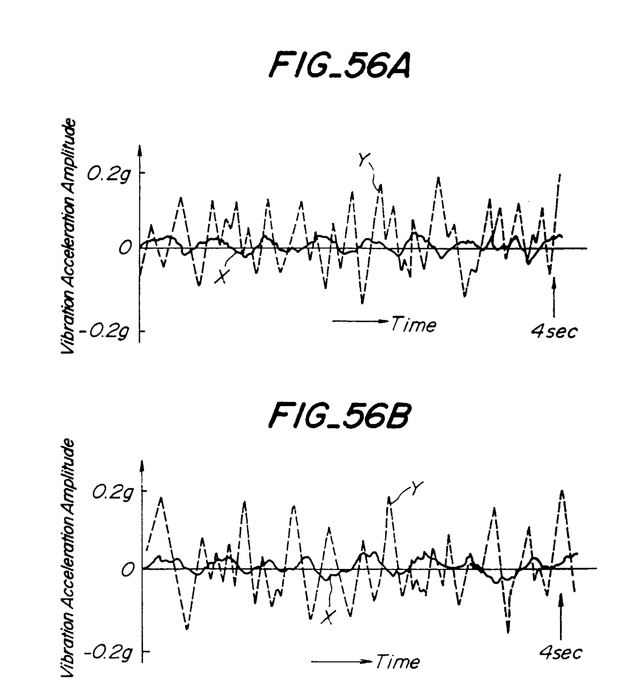

Figs. 56A and 56B are graphs showing the waveforms of the vibration acceleration amplitude of the objects 201, 202, under situation (X) in which the adaptive-type vibration control according to the invention is effected, and situation (Y) without the adaptive-type vibration control. Fig. 56A corresponds to the vibration acceleration amplitude of the object 201, and Fig. 56B corresponds to the vibration acceleration amplitude of the object 202. It is clear that, by effecting the adaptive-type vibration control according to the invention, the vibration acceleration amplitude of the objects 201, 202 can be reduced to less than one third as compared with that under the situation (Y) in which the adaptive-type vibration control is not effected.

It will be appreciated from the foregoing description that the present invention provides an adaptive-type active vibration control apparatus for significantly reducing the vibration of various objects without being affected by resonance peak frequencies, which is particularly suitable when the object is applied with vibration over a wide frequency range, or with vibration of a random or periodic nature.

**Claims**

1.  Apparatus for actively controlling vibration of at least one object, comprising:

    a movable base member (1);
    a vibration-isolating means;
    at least one object (3) mounted on said movable base member (1) with said vibration-isolating means disposed therebetween;
    a first vibration sensor (13) secured to said object (3) for detecting original vibration thereof, said vibration sensor (13) outputting a vibration signal corresponding to said detected vibration;
    at least one adaptive digital filter (8), responsive to said vibration signal, including adaptive algorithm means (17) for generating a vibration control signal having a vibration waveform for minimizing the amplitude of vibration of said object (3), said filter (8) being connected to said first vibration sensor (13);
    at least one actuator (12), secured to said object (3) and responsive to said vibration control signal, for applying an inverse vibration signal to said object (3) so as to reduce the vibration of said object (3);
    a resonance preventing circuit (19) for modifying an output from said adaptive digital filter (8) and connected in parallel to said adaptive digital filter (8);
    a means for transmitting an output of said adaptive digital filter (8) to said actuator (12); and
    a second vibration sensor (4) secured to said base member for detecting vibration thereof, said second vibration sensor (4) being connected to said digital filter (8);

    characterized in that said inverse vibration signal is transmitted to said actuator (12) from said adaptive digital filter (8) so as to apply to the object (3) a compensatory vibration which interferes with the original vibration of the object (3) to actively cancel the original vibration and in that the actuator (12) generates the compensatory vibration on a time domain basis in response to said vibration control signal of said adaptive digital filter (8).

2.  Apparatus as claimed in claim 1, characterized by further comprising means for fixing coefficients of said adaptive digital filter (8) so as to provide a fixed-type digital filter.

3.  Apparatus as claimed in claim 1 or 2, characterized in that said digital filter (8) is one of a Finite Impulse Response filter and Infinite Impulse Response filter.

4.  Apparatus as claimed in any of claims 1 to 3, characterized in that said first vibration sensor (13) is one of a displacement sensor, velocity sensor, and acceleration sensor.

5.  Apparatus as claimed in any of claims 1 to 4, characterized in that said actuator (12) is one of an electromagnetic actuator, piezo-electric actuator, an ultrasonic motor, a pneumatic actuator, and a hydraulic actuator.

6.  Apparatus as claimed in any of claims 1 to 5, characterized in that said object (3) is one of a vehicle seat of a vehicle, a suspension of a vehicle, and an engine of a vehicle.

7.  Apparatus as claimed in any of claims 1 to 6, characterized in that said first vibration sensor (13) is connected to said adaptive algorithm (17) of an inverse vibration generating circuit (20), so that an inverse vibration signal is applied to said actuator (12) from said adaptive digital filter (8) so as to apply to the object (3) a compensatory vibration which interferes with the original vibration of the object (3) to actively cancel the original vibration, and in that the actuator (12) generates the compensatory vibration on a time domain basis in response to said vibration control signal of said adaptive digital filter.

8. Apparatus as claimed in any of claims 1 to 6, characterized in that said first and second vibration sensors (13, 4) are connected to said adaptive algorithm (17) of an inverse vibration generating circuit (20), so that an inverse vibration signal is applied to said actuator (12) from said adaptive digital filter (8) so as to apply to the object (3) a compensatory vibration which interferes with the original vibration of the object (3) to actively cancel the original vibration, and in that the actuator (12) generates the compensatory vibration on a time domain basis in response to said vibration control signal of the adaptive digital filter (8).

9. Apparatus as claimed in any of claims 1 to 6, characterized in that said second vibration sensor (4) is connected to said adaptive algorithm (17) of an inverse vibration generating circuit (20), so that an inverse signal is applied to said actuator (12) from said adaptive digital filter (8) so as to apply to the object (3) a compensatory vibration which interferes with the original vibration of the object (3) to actively cancel the original vibration, and in that the actuator (12) generates the compensatory vibration on a time domain basis in response to said vibration control signal of said adaptive digital filter (8).

10. Apparatus as claimed in claim 9, characterized in that at least one of said vibration sensor (13) and said actuator (12) are secured to said object (3).

11. Apparatus as claimed in any of claims 1 to 6, characterized in that said vibration sensor (4) is connected to said adaptive algorithm (17) of an inverse vibration generating circuit (20) and said actuator (12) is connected to said feedback circuit so that an inverse vibration signal is applied to said actuator (12) from said adaptive digital filter (8) so as to apply to the object (3) a compensatory vibration which interferes with the original vibration of the object (3) to actively cancel the original vibration, and in that the actuator (12) generates the compensatory vibration on a time domain basis in response to said vibration control signal of the adaptive digital filter (8).

12. Apparatus as claimed in claim 11, characterized in that at least one of said vibration sensors (13, 4) is secured to said object (3) for detecting vibration thereof and connected to an inverse vibration generating circuit (20).

13. Apparatus as claimed in claim 11 or 12, characterized in that said actuator (12) is arranged between a plurality of objects and said movable base member (1) with said vibration-isolating means disposed therebetween.

14. Apparatus as defined in any of claims 1 to 13, characterized in that said inverse vibration signals are transmitted to said actuators (12, 12) from said adaptive digital filters (8, 8) so as to apply to the object (3) a compensatory vibration which interferes with the original vibration of the object (3) to actively cancel the original vibration of the object (3) in each of two directions, and in that the actuators (12, 12) generate the compensatory vibration on a time domain basis in response to said vibration control signals of said adaptive digital filters (8, 8).

15. Apparatus as claimed in claim 14, characterized by further comprising a crosstalk elimination circuit (74) for each of the two directions, said crosstalk elimination circuits (74) comprising means for eliminating correlative crosstalk between each of said digital filters (8, 8).

16. Apparatus as claimed in any of claims 1 to 13, characterized in that said inverse vibration signals are transmitted to said actuators (12, 12) from said adaptive digital filters (8, 8) so as to apply to the object (3) a compensatory vibration which interferes with the original vibration of the object (3) to actively cancel the original vibration of the object (3) in each of three directions, and in that the actuators (12, 12) generate the compensatory vibration on a time domain basis in response to said vibration control signals of said adaptive digital filters (8, 8).

17. Apparatus as claimed in claim 16, characterized by further comprising a crosstalk elimination circuit (74) for each of the three directions, said crosstalk elimination circuits (74) comprising means for eliminating correlative crosstalk between each of said digital filters (8, 8).

**Patentansprüche**

1. Gerät zum aktiven Steuern der Schwingung mindestens eines Gegenstandes, mit:

einem beweglichen Basisteil (1): schwingungsisolierenden Mitteln: mindestens einem Gegenstand (3), der am beweglichen Basisteil (1) angebracht ist, wobei die schwingungsisolierenden Mittel dazwischen angeordnet sind;

einem ersten Schwingungsfühler (13), der am Gegenstand (3) angebracht ist, um dessen ursprüngliche Schwingung zu erfassen, wobei der Schwingungsfühler (13) ein Schwingungssignal ausgibt, das der erfaßten Schwingung entspricht;

mindestens ein adaptives digitales Filter (8), das auf das Schwingungssignal anspricht und adaptive Algorithmusmittel (17) aufweist, um ein Schwingungssteuersignal mit einer Schwingungs-Wellenform zum Minimieren der Amplitude der Schwingung des Gegenstandes (3) zu erzeugen, wobei das Filter (8) mit dem ersten Schwingungsfühler (13) verbunden ist;

mindestens einer Betätigungseinrichtung (12), die am Gegenstand (3) befestigt ist und auf das Schwingungssteuersignal anspricht, um ein umgekehrtes Schwingungssignal auf den Gegenstand (3) aufzubringen, um die Schwingung des Gegenstandes (3) zu verringern;

einer Resonanz-Verhinderungsschaltung (19) zum Modifizieren des Ausgangs aus dem adaptiven digitalen Filter (8) und in parallelem Anschluß an das adaptive digitale Filter (8);

Mitteln zum Übertragen der Ausgabe des adaptiven digitalen Filters (8) an die Betätigungseinrichtung (12); und

einem zweiten Schwingungsfühler (4), der am Basisteil befestigt ist, um dessen Schwingung zu erfassen, wobei der zweite Schwingungsfühler (4) mit dem digitalen Filter (8) verbunden ist;

dadurch gekennzeichnet, daß das umgekehrte Schwingungssignal auf die Betätigungseinrichtung (12) vom adaptiven, digitalen Filter (8) her übertragen wird, um auf den Gegenstand (3) eine kompensierende Schwingung aufzubringen, die in Interferenz mit der ursprünglichen Schwingung des Gegenstandes (3) steht, um aktiv die ursprüngliche Schwingung aufzuheben, und daß die Betätigungseinrichtung (12) die kompensierende Schwingung auf der Grundlage eines Zeitbereichs in Abhängigkeit vom Schwingungssteuersignal des adaptiven, digitalen Filters (8) erzeugt,

2. Gerät, wie beansprucht in Anspruch 1, dadurch gekennzeichnet, daß es ferner Mittel zum Festlegen von Koeffizienten des adaptiven digitalen Filters (8) aufweist, um für ein digitales Filter festgelegter Art zu sorgen.

3. Gerät, wie beansprucht in Anspruch 1 oder 2, dadurch gekennzeichnet, daß das digitale Filter (8) entweder ein Filter mit Ansprechverhalten für einen endlichen Impuls oder ein Filter mit Ansprechverhalten für einen unendlichen Impuls ist.

4. Gerät, wie beansprucht in irgendeinem der Ansprüche 1 bis 3, dadurch gekennzeichnet, daß der erste Schwingungsfühler (13) ein Streckenfühler, ein Geschwindigkeitsfühler oder ein Beschleunigungsfühler ist.

5. Gerät, wie beansprucht in irgendeinem der Ansprüche 1 bis 4, dadurch gekennzeichnet, daß die Betätigungseinrichtung (12) eine elektromagnetische Betätigungseinrichtung, eine piezoelektrische Betätigungseinrichtung, ein Ultraschallmotor, eine pneumatische Betätigungseinrichtung oder eine hydraulische Betätigungseinrichtung ist.

6. Gerät, wie beansprucht in irgendeinem der Ansprüche 1 bis 5, dadurch gekennzeichnet, daß der Gegenstand (3) ein Fahrzeugsitz eines Fahrzeugs, eine Aufhängung eines Fahrzeugs oder ein Motor eines Fahrzeugs ist.

7. Gerät, wie beansprucht in irgendeinem der Ansprüche 1 bis 6, dadurch gekennzeichnet, daß der erste Schwingungsfühler (13) mit dem adaptiven Algorithmus (17) einer Schaltung (20) zum Erzeugen einer umgekehrten Schwingung verbunden ist, so daß ein umgekehrtes Schwingungssignal an die Betätigungseinrichtung (12) vom adaptiven digitalen Filter (8) her angelegt wird, um auf den Gegenstand (3) eine kompensierende Schwingung aufzubringen, die in Interferenz mit der ursprünglichen Schwingung des Gegenstandes (3) steht, um aktiv die ursprüngliche Schwingung aufzuheben, und daß die Betätigungseinrichtung (12) die kompensierende Schwingung auf der Grundlage eines Zeitbereichs in Abhängigkeit vom Schwingungssteuersignal des adaptiven digitalen Filters erzeugt.

8. Gerät, wie beansprucht in irgendeinem der Ansprüche 1 bis 6, dadurch gekennzeichnet, daß der erste und zweite Schwingungsfühler (13, 4) mit dem adaptiven Algorithmus (17) einer Schaltung (20) zum Erzeugen einer umgekehrten Schwingung verbunden sind, so daß ein umgekehrtes Schwingungssignal auf die Betätigungseinrichtung (12) vom adaptiven digitalen Filter (8) her so aufgebracht wird, daß auf den Gegenstand (3) eine kompensierende Schwingung aufgebracht wird, die in Interferenz mit der ursprünglichen Schwingung des Gegenstandes (3) steht, um aktiv die ursprüngliche Schwingung aufzuheben, und daß die Betätigungseinrichtung (12) die kompensierende Schwingung auf der Grundlage eines Zeitbereichs in Abhängigkeit vom Schwingungssteuersignal des adaptiven digitalen Filters (8) erzeugt.

9. Gerät, wie beansprucht in irgendeinem der Ansprüche 1 bis 6, dadurch gekennzeichnet, daß der zweite Schwingungsfühler (4) an den adaptiven Algorithmus (17) einer Schaltung (20) zum Erzeugen einer umgekehrten Schwingung so angeschlossen ist, daß ein umgekehrtes Signal auf die Betätigungseinrichtung (12) vom adaptiven digitalen Filter (8) her angelegt wird, um auf den Gegenstand (3) eine kompensierende Schwingung aufzubringen, die mit der ursprünglichen Schwingung des Gegenstandes (3) in Interferenz steht, um aktiv die ursprüngliche Schwingung aufzuheben, und daß die Betätigungseinrichtung (12) die kompensierende Schwingung auf der Grundlage eines Zeitbereichs in Abhängigkeit von dem Schwingungssteuersignal des adaptiven digitalen Filters (8) erzeugt.

10. Gerät, wie beansprucht in Anspruch 9, dadurch gekennzeichnet, daß mindestens einer der Schwingungsfühler (13) und/oder die Betätigungseinrichtung (12) am Gegenstand (3) befestigt ist.

11. Gerät, wie beansprucht in irgendeinem der Ansprüche 1 bis 6, dadurch gekennzeichnet, daß der Schwingungsfühler (4) an den adaptiven Algorithmus (17) einer Schaltung (20) zum Erzeugen einer Umkehrschwingung angeschlossen ist, und daß die Betätigungseinrichtung (12) an die Rückkopplungsschaltung angeschlossen ist, so daß ein umgekehrtes Schwingungssignal auf die Betätigungseinrichtung (12) vom adaptiven digitalen Filter (8) her aufgebracht wird, um auf den Gegenstand (3) eine kompensierende Schwingung aufzubringen, die in Interferenz mit der ursprünglichen Schwingung des Gegenstandes (3) steht, um die ursprüngliche Schwingung aktiv aufzuheben, und daß die Betätigungseinrichtung (12) die kompensierende Schwingung auf der Grundlage eines Zeitbereichs in Abhängigkeit vom Schwingungssteuersignal des adaptiven digitalen Filters (8) erzeugt.

12. Gerät, wie beansprucht in Anspruch 11, dadurch gekennzeichnet, daß mindestens einer der Schwingungsfühler (13, 4) am Gegenstand (3) befestigt ist, um dessen Schwingung zu erfassen, und mit einer Schaltung (20) zum Erzeugen einer Umkehrschwingung verbunden ist.

13. Gerät, wie beansprucht in Anspruch 11 oder 12, dadurch gekennzeichnet, daß die Betätigungseinrichtung (12) zwischen einer Vielzahl von Gegenständen angeordnet ist, und daß das bewegliche Basisteil (1) mit den schwingungsisolierenden Mitteln dazwischen angeordnet ist.

14. Gerät, wie umrissen in irgendeinem der Ansprüche 1 bis 13, dadurch gekennzeichnet, daß die umgekehrten Schwingungssignale auf die Betätigungseinrichtung (12, 12) von den adaptiven digitalen Filtern (8, 8) her übertragen werden, um auf den Gegenstand (3) eine kompensierende Schwingung aufzubringen, die in Interferenz mit der ursprünglichen Schwingung des Gegenstandes (3) steht, um die ursprüngliche Schwingung des Gegenstandes (3) in jeder zweier Richtungen aktiv aufzuheben, und daß die Betätigungseinrichtungen (12, 12) die kompensierende Schwingung auf der Grundlage eines Zeitbereichs in Abhängigkeit von den Schwingungssteuersignalen der adaptiven digitalen Filter (8, 8) erzeugen.

15. Gerät, wie beansprucht in Anspruch 14, dadurch gekennzeichnet, daß es ferner eine Kreuzkopplungs-Aufhebeschaltung (74) für jede der beiden Richtungen aufweist, wobei die Kreuzkopplungs-Aufhebeschaltungen (74) Mittel zum Aufheben der korrelativen Kreuzkopplung zwischen jeden der digitalen Filter (8, 8) aufweist.

16. Gerät, wie beansprucht in irgendeinem der Ansprüche 1 bis 13, dadurch gekennzeichnet, daß die umgekehrten Schwingungssignale auf die Betätigungseinrichtung (12, 12) von den adaptiven digitalen Filtern (8, 8) her übertragen werden, um auf den Gegenstand (3) eine kompensierende Schwingung aufzubringen, die in Interferenz mit der ursprünglichen Schwingung des Gegenstandes (3) steht, um aktiv die ursprüngliche Schwingung des Gegenstandes (3) in jeder von drei Richtungen aufzuheben, und daß die Betätigungseinrichtungen (12, 12) die kompensierende Schwingung auf der Grundlage eines Zeitbereichs in Abhängigkeit von den Schwingungssteuersignalen der adaptiven digitalen Filter (8, 8) erzeugen.

17. Gerät, wie beansprucht in Anspruch 16, dadurch gekennzeichnet, daß es ferner eine Kreuzkopplungs-Aufhebeschaltung (74) für jede der drei Richtungen aufweist, wobei die Kreuzkopplungs-Aufhebeschaltungen (74) Mittel aufweisen, um die korrelative Kreuzkopplung zwischen jeden der digitalen Filter (8, 8) aufzuheben.

**Revendications**

1. Appareil pour contrôler activement les vibrations d'au moins un objet, comprenant:

   un élément de base mobile (1);
   un moyen d'arrêt des vibrations;
   au moins un objet (3) monté sur ledit élément de base mobile (1) avec ledit moyen arrêtant les vibrations, disposé entre eux;
   un premier capteur de vibrations (13) fixé audit objet (3) pour détecter les vibrations initiales de celui-ci, ledit capteur de vibrations (13) produisant un signal de vibrations correspondant auxdites vibrations détectées;

au moins un filtre numérique adaptif (8) réagissant audit signal de vibrations et comprenant un algorithme adaptif (17) pour créer un signal de contrôle des vibrations ayant une forme d'onde de vibrations afin de minimiser l'amplitude des vibrations dudit objet (3), ledit filtre (8) étant connecté audit premier capteur de vibrations (13);

au moins un actionneur (12) fixé audit objet (3) et réagissant audit signal de contrôle des vibrations pour appliquer audit objet (3) un signal de vibrations inverses (3), de manière à réduire les vibrations dudit objet (3);

un circuit de prévention de la résonance (19) servant à modifier le signal de sortie provenant dudit filtre numérique adaptif (8) et connecté en parallèle audit filtre numérique adaptif (8);

un moyen pour transmettre le signal de sortie dudit filtre numérique adaptif (8) audit actionneur (12); et

un deuxième capteur de vibrations (4) fixé audit élément de base pour détecter ces vibrations, ledit deuxième capteur de vibrations (4) étant connecté audit filtre numérique (8);

caractérisé en ce que ledit signal de vibrations inverses est transmis audit actionneur (12) depuis ledit filtre numérique adaptif (8), de manière à appliquer à l'objet (3) des vibrations compensatoires qui interfèrent avec les vibrations initiales de l'objet (8) afin de supprimer activement les vibrations initiales et en ce que l'actionneur (12) crée les vibrations compensatoires sur une base de temps en réponse audit signal de contrôle de vibrations dudit filtre numérique adaptif (8).

2. Appareil selon la revendication 1, caractérisé en ce qu'il comprend en outre un moyen pour fixer les coefficients dudit filtre numérique adaptif (8) de manière à obtenir un filtre numérique de type fixe.

3. Appareil selon la revendication 1 ou 2, caractérisé en ce que ledit filtre numérique (8) est un filtre à réponse d'impulsions finies ou bien un filtre à réponse d'impulsions infinies.

4. Appareil selon l'une quelconque des revendications 1 à 3, caractérisé en ce que ledit premier capteur de vibrations (13) est soit un capteur de déplacement, soit un capteur de vitesse, soit un capteur d'accélération.

5. Appareil selon l'une quelconque des revendications 1 à 4, caractérisé en ce que ledit actionneur (12) est soit un actionneur électromagnétique, soit un actionneur piézoélectrique, soit un moteur ultrasonique, soit un actionneur pneumatique, soit un actionneur hydraulique.

6. Appareil selon l'une quelconque des revendications 1 à 5, caractérisé en ce que ledit objet (3) est soit un siège de véhicule, soit une suspension de véhicule, soit un moteur de véhicule.

7. Appareil selon l'une quelconque des revendications 1 à 6, caractérisé en ce que ledit premier capteur de vibrations (13) est connecté audit algorithme adaptif (17) d'un circuit créant des vibrations inverses (20), de façon qu'un signal de vibrations inverse soit appliqué audit actionneur (12) par ledit filtre numérique adaptif (8), de façon à soumettre l'objet (3) à des vibrations compensatoires qui interfèrent avec les vibrations initiales de l'objet (3) afin de supprimer activement les vibrations initiales et en ce que l'actionneur (12) crée les vibrations compensatoires sur une base de domaine de temps en réponse audit signal de contrôle des vibrations dudit filtre numérique adaptif.

8. Appareil selon l'une quelconque des revendications 1 à 6, caractérisé en ce que lesdits premier et deuxième capteurs de vibrations (13, 4) sont connectés audit algorithme adaptif (17) d'un circuit créant des vibrations inverses (20), en ce qu'un signal de vibrations inverses est appliqué audit actionneur (12) par ledit filtre numérique adaptif (8) de façon à soumettre l'objet (3) à des vibrations compensatoires qui interfèrent avec les vibrations initiales de l'objet (3) afin de supprimer activement les vibrations initiales et en ce que l'actionneur (12) crée les vibrations compensatoires sur une base de domaine de temps en réponse audit signal de contrôle des vibrations du filtre numérique adaptif (8).

9. Appareil selon l'une quelconque des revendications 1 à 6, caractérisé en ce que ledit deuxième capteur de vibrations (4) est connecté audit algorithme adaptif (17) d'un circuit créant des vibrations inverses (20) de façon qu'un signal inverse soit appliqué audit actionneur (12) par ledit filtre numérique adaptif (8) de façon à soumettre l'objet (3) à des vibrations compensatoires qui interfèrent avec les vibrations initiales de l'objet (3) afin de supprimer activement les vibrations initiales et en ce que l'actionneur (12) crée des vibrations compensatoires sur une base de domaine de temps en réponse audit signal de contrôle des vibrations dudit filtre numérique adaptif (8).

10. Appareil selon la revendication 9, caractérisé en ce que, au moins soit le capteur de vibrations (13), soit ledit actionneur (12) sont fixés audit objet (3).

11. Appareil selon l'une quelconque des revendications 1 à 6, caractérisé en ce que ledit capteur de vibrations (4) est connecté audit algorithme adaptif (17) d'un circuit créant des vibrations inverses (20) et que ledit actionneur (12) est connecté audit circuit de rétroaction de façon à appliquer un signal de vibrations inverses audit actionneur (12) en provenance dudit filtre numérique adaptif (8), de façon à soumettre l'objet (3) à des vibrations compensatoires qui interfèrent avec les vibrations initiales de l'objet (3) afin de supprimer activement les vibrations initiales et ce que l'actionneur (12) crée des vibrations compensatoires sur une base de domaine de temps en réponse audit signal de contrôle des vibrations du filtre numérique adaptif (8).

12. Appareil selon la revendication 11, caractérisé en ce que, au moins d'un desdits capteurs de vibrations (13, 4) est fixé audit objet (3) pour détecter les vibrations de celui-ci et est connecté à un circuit créant des vibrations inverses (20).

13. Appareil selon la revendication 11 ou 12, caractérisé en ce que ledit actionneur (12) est disposé entre plusieurs objets et que ledit élément de base mobile (1) avec ledit moyen arrêtant les vibrations est disposé entre ceux-ci.

14. Appareil selon l'une quelconque des revendications 1 à 13, caractérisé en ce que lesdits signaux de vibrations inverses transmis auxdits actionneurs (12, 12) en provenance desdits filtres numériques adaptifs (8, 8) de manière à soumettre l'objet (3) à des vibrations compensatoires qui interfèrent avec les vibrations initiales de l'objet (3) pour supprimer activement les vibrations initiales de l'objet (3) dans chacune des deux directions et en ce que les actionneurs (12, 12) créent des vibrations compensatoires sur une base de domaine de temps en réponse auxdits signaux de contrôle des vibrations desdits filtres numériques adaptifs (8, 8).

15. Appareil selon la revendication 14, caractérisé en ce qu'il comprend en outre un circuit d'élimination de la diaphonie (74) pour chacune des deux directions, ledit circuit d'élimination de la diaphonie (74) comprenant un moyen pour éliminer la diaphonie correspondante entre chacun des filtres numériques (8, 8).

16. Appareil selon l'une quelconque des revendications 1 à 13, caractérisé en ce que lesdits signaux de vibrations inverses sont transmis auxdits actionneurs (12, 12) en provenance desdits filtres numériques adaptifs (8, 8), de façon à soumettre l'objet (3) à des vibrations compensatoires qui interfèrent avec les vibrations initiales de l'objet (3), de manière à supprimer activement les vibrations initiales de l'objet (3) dans chacune des trois directions et en ce que les actionneurs (12, 12) créent les vibrations compensatoires sur une base de domaine de temps en réponse auxdits signaux de contrôle des vibrations desdits filtres numériques adaptifs (8, 8).

17. Appareil selon la revendication 16, caractérisé en ce qu'il comprend en outre un circuit d'élimination de la diaphonie (74) pour chacune des trois directions, lesdits circuits d'élimination de la diaphonie (74) comprenant un moyen pour éliminer la diaphonie correspondante entre chacun desdits filtres numériques (8, 8).

EP 0 412 853 B1

# FIG_1

EP 0 412 853 B1

## FIG.2

## FIG.3

## FIG_4

## FIG_5

EP 0 412 853 B1

# FIG.6

# FIG.7

# FIG. 8

# FIG. 9

# FIG_10

# FIG.11

# FIG.12

# FIG.13

## FIG.14

## FIG.15

# FIG_16

# FIG_17

# FIG.18

*FIG.19*

Correlation between $\dot{x}i$ and $\dot{x}o$

Correlation between $\dot{x}i$ and $\ddot{z}o$

Response Ratio $\left|\dfrac{\dot{x}_i}{\dot{x}o + \ddot{z}o}\right|$

OFF(A)

ON(B)

1

0    4  5    9  10

Frequency (Hz)

*FIG.20*

Vibration Acceleration Level $\dot{x}_i$ (dB)

90

80

70

60

OFF(A)

ON(B)

0    4  5    9  10

Frequency (Hz)

*FIG.21*

Vibration Acceleration Amplitude $\ddot{x}_i$ (Volt)

1

0

-1

ON(B)    OFF(A)

Time t

0    400    (msec)

30

# FIG. 22

# FIG. 23

# FIG. 24

# FIG. 25

# FIG.26

# FIG.27

# FIG.28

## FIG.29

**FIG.30**

Control Circuit for Reducing Three-dimensional (X,Y,Z) Vibration

# FIG. 31

# FIG.32

# FIG. 33

# FIG_34

# FIG_35

## FIG_36

## FIG_37

## FIG_38

## FIG_39

## FIG_40

## FIG_41

# FIG.42

EP 0 412 853 B1

# FIG_43

EP 0 412 853 B1

# FIG.44

## FIG_45

## FIG_46

## FIG_47

# FIG_48

# FIG_49

## FIG_50

## FIG_51

## FIG.52

## FIG.53

FIG_54

FIG_55A

FIG_55B

53

## FIG_56A

## FIG_56B